# EUROPEAN PATENT APPLICATION

(11) **EP 3 805 351 A1**
(43) Date of publication of application: **14.04.2021**
(21) Application number: 20210794.2
(22) Date of filing: 22.02.2018
(51) Int. Cl.: C12C 1/027, C12C 1/047

(54) **USE OF STEVIOL GLYCOSIDE IN MALTING**

(30) Priority: 24.02.2017 US 201762463106 P
(62) Divisional of application: 18714387.0
(71) Applicant: Corn Products Development Inc., Westchester, IL 60154 (US)
(72) Inventor: BAX JR, Fabio, BRIDGEWATER, NJ New Jersey 08807 (US); GONCALVES ANTUNES, Jose, BRIDGEWATER, NJ New Jersey 08807 (US); MINAMIGUCHI, Marcelo, BRIDGEWATER, NJ New Jersey 08807 (US)
(74) Representative: Hoyng Rokh Monegier B.V.

(57) **Abstract**

A method of germinating cereal grains includes: steeping cereal grains in water to obtain steeped cereal grains having average moisture content of 36 wt% to 55 wt%; adding a steviol glycoside to the steeped cereal grains to form a mixture; germinating the mixture to form a germinated mixture; and drying the germinated mixture sufficiently to result in a malt product.

## Description

### CROSS-REFERENCE TO RELATED APPLICATIONS

This application claims the benefit of priority to U.S. Provisional Application No. 62/463106, filed on February 24, 2017, the contents of which are incorporated by reference herein in their entirety.

### TECHNICAL FIELD

This invention relates to use of at least one steviol glycoside in a malting process for increasing cereal grain germination and producing a malt product for brewing.

### BACKGROUND

Typically, the first step in beer production is malt production. Malt is made using grain cereals such as barley, rye, sorghum, or millet. About 92.5% of all beer production is brewed by using malt and adjuncts - i.e., malt replacements. The remaining 7.5% of world beer production is brewed with 100% malt or 100% pseudo cereals.

The malting produces enzymes in the cereal kernel such as cytolytic enzymes (e.g., beta-glycanases and cytase), protein degrading enzymes (proteases), phosphoric acid splitting enzymes (phosphatases), and starch degrading enzymes (alpha- and beta-amylases), which alter the cereal kernel. The altered cereal produces low molecular weight degradation products from high molecular weight compounds. These changes play an important role in the brewing process regarding brewing efficiency and beer quality.

The traditional malting process can be divided into three separate stages: (1) steeping, (2) germinating, and (3) cooking (e.g., but not limited to, kilning). Typically, stage (2), germination, is interrupted at a selected time to comply with malt quality specifications required by breweries.

Natural and seasonal crop variation in cereal quality - i.e., in amino acid and protein composition and/or concentration - generated by weather influence are critical factors which can negatively affect the cereal malting performance. When the minimum requirements for malt quality are not met, kernel germination, brewing performance, and beer quality are affected.

### SUMMARY

In some embodiments, the present invention is a method including: (a) obtaining a plurality of cereal grains; (b) combining the plurality of cereal grains with water; (c) steeping the plurality of cereal grains in the water until the plurality of cereal grains has an average moisture content of 36 wt% to 55 wt%; (d) after the steeping step, adding at least one steviol glycoside to the plurality of cereal grains to form a mixture; (e) germinating the mixture of the plurality of cereal grains and the at least one steviol glycoside, where the germinating step is conducted for a sufficient time for more than 80% of the plurality of cereal grains to have a rootlet length of at least 1.5 times a kernel length; and where the sufficient time for the germination step is shorter than a sufficient time for more than 50% of the plurality of cereal grains to have a rootlets length of at least 1.5 times a kernel length when germinating without the at least one steviol glycoside, and (f) drying the germinated plurality of cereal grains sufficiently to result in a malt product having a moisture content of 2 wt% to 10 wt%; where the malt product has the following characteristics: a fine ground extract of 80 wt% to 90 wt%, a viscosity of 1.0 cP to 1.6 cP; a protein content of 8 wt% to 13 wt%, a soluble nitrogen content of 650 mg/100g malt to 800mg/100g malt, or any combination thereof.

In some embodiments, the present invention is a method including: (a) obtaining a plurality of cereal grains; (b) combining the plurality of cereal grains with water; (c) steeping the plurality of cereal grains in the water until the plurality of cereal grains has an average moisture content of 36 wt% to 55 wt%; (d) after the steeping step, adding at least one steviol glycoside to the plurality of cereal grains to form a mixture; (e) germinating the mixture of the plurality of cereal grains and the at least one steviol glycoside, where the germinating step is conducted for a sufficient time for more than about 80% of the plurality of cereal grains to have a rootlet length of at least 1.5 times a kernel length; and where the sufficient time for the germination step is shorter than a sufficient time for more than about 80% of the plurality of cereal grains to have a rootlets length of at least 1.5 times a kernel length when germinating without the at least one steviol glycoside, and (f) drying the germinated plurality of cereal grains sufficiently to result in a malt product having a moisture content of 2 wt% to 10 wt%; where the malt product has the following characteristics: a fine ground extract of about 79 wt% to about 90 wt%, a viscosity of 1.0 cP to 1.6 cP; a protein content of 8 wt% to 13 wt%, a soluble nitrogen content of 650 mg/100g malt to 800mg/100g malt, or any combination thereof.

In some embodiments, the at least one steviol glycoside includes 6 wt% to 35 wt% of stevioside based on a total weight of the at least one steviol glycoside. In some embodiments, the least one steviol glycoside includes 21 wt% to 99 wt% of rebaudioside A based on a total weight of the at least one steviol glycoside. In some embodiments, the at least one steviol glycoside includes at least one of dulcoside A, rebaudioside C, rebaudioside D, rebaudioside F, steviolbioside, or rubusoside. In some embodiments, the at least one steviol glycoside includes at least one of: (i) 0.1 wt% to 2.5 wt% dulcoside A; (ii) 0.1 wt% to 4 wt% rebaudioside B; (iii) 0.1 wt% to 5 wt% rebaudioside D; (iv) 0.1 wt% to 3 wt% rebaudioside F; (v) 0.1 wt% to 1.5 wt% steviolbioside; (vi) 0.1 wt% to 4 wt% rubusoside; or (vii) 10.0 wt% to 25.0 wt% rebaudioside C, based on a total weight of the steviol glycoside.

In some embodiments, step (c) includes adding the at least one steviol glycoside in an amount of 0.000005 kg to 0.00004 kg of the at least one steviol glycoside per 1 metric ton of the plurality of cereal grains. In some embodiments, the at least one steviol glycoside is added in an amount of 0.000025 kg to 0.000038 kg per 1 metric ton of the plurality of cereal grains.

In some embodiments, the plurality of cereal grains include a barley grain, a wheat grain, a sorghum grain, a millet grain, a rye grain, an oat grain, a corn grain, a rice grain, or any combination thereof. In some embodiments, the plurality of cereal grains includes a barley grain. In some embodiments, the barley grain is a two row barley, or six row barley, or a combination thereof.

In some embodiments, the steeping step of the method includes adding the at least one steviol glycoside to water to form a steviol glycoside solution having a concentration of 0.01 to 0.08 mg/L followed by adding the steviol glycoside solution to the plurality of cereal grains. In some embodiments, the steeping step of the method includes adding the at least one steviol glycoside to water to form a steviol glycoside solution having a concentration of 0.2 to 0.5 mg/L followed by adding the steviol glycoside solution to the plurality of cereal grains. In some embodiments, the steeping step of the method includes adding the at least one steviol glycoside solution to the plurality of cereal grains by spraying the steviol glycoside solution on the plurality of cereal grains.

In some embodiments, the method does not include adding gibberellic acid.

In some embodiments, the present invention is a method including: (a) obtaining a plurality of cereal grains; (b) combining the plurality of cereal grains with water; (c) steeping the plurality of cereal grains in the water until the plurality of cereal grains has an average moisture content of 36 wt% to 55 wt%; (d) during the steeping step, adding at least one steviol glycoside to the plurality of cereal grains to form a mixture; (e) germinating the mixture of the plurality of cereal grains and the at least one steviol glycoside, where the germinating step is conducted for a sufficient time for more than 80% of the plurality of cereal grains to have a rootlet length of at least 1.5 times a kernel length; and where the sufficient time for the germination step is shorter than a sufficient time for more than 50% of the plurality of cereal grains to have a rootlets length of at least 1.5 times a kernel length when germinating without the at least one steviol glycoside, and (f) drying the germinated plurality of cereal grains sufficiently to result in a malt product having a moisture content of 2 wt% to 10 wt%; where the malt product has the following characteristics: a fine ground extract of 80 wt% to 90 wt%, a viscosity of 1.0 cP to 1.6 cP; a protein content of 8 wt% to 13 wt%, a soluble nitrogen content of 650 mg/100g malt to 800mg/100g malt, or any combination thereof.

In some embodiments, the present invention is a method including: (a) obtaining a plurality of cereal grains; (b) combining the plurality of cereal grains with water; (c) steeping the plurality of cereal grains in the water until the plurality of cereal grains has an average moisture content of 36 wt% to 55 wt%; (d) during the steeping step, adding at least one steviol glycoside to the plurality of cereal grains to form a mixture; (e) germinating the mixture of the plurality of cereal grains and the at least one steviol glycoside, where the germinating step is conducted for a sufficient time for more than about 80% of the plurality of cereal grains to have a rootlet length of at least 1.5 times a kernel length; and where the sufficient time for the germination step is shorter than a sufficient time for more than about 80% of the plurality of cereal grains to have a rootlets length of at least 1.5 times a kernel length when germinating without the at least one steviol glycoside, and (f) drying the germinated plurality of cereal grains sufficiently to result in a malt product having a moisture content of 2 wt% to 10 wt%; where the malt product has the following characteristics: a fine ground extract of about 79 wt% to about 90 wt%, a viscosity of 1.0 cP to 1.6 cP; a protein content of 8 wt% to 13 wt%, a soluble nitrogen content of 650 mg/100g malt to 800mg/100g malt, or any combination thereof.

In some embodiments, the present invention is a method including steeping cereal grains in water to obtain steeped cereal grains with an average moisture content of 36 wt% to 55 wt%; adding a steviol glycoside to the steeped cereal grains to form a mixture; germinating the mixture for a first sufficient time for more than about 80% of the cereal grains to have an average rootlet length of at least 1.5 times a kernel length to form germinated cereal grains; and drying the germinated cereal grains sufficiently to result in a malt product having a moisture content of 2 wt% to 10 wt%; wherein the first sufficient time for the germination step is shorter than a second sufficient time for more than about 80% of the cereal grains to have an average rootlet length of at least 1.5 times a kernel length when germinating without the steviol glycoside, and the malt product exhibits a fine ground extract of about 79 wt% to about 90 wt%; a viscosity of 1.0 cP to 1.6cP; a protein content of 8 wt% to 13 wt%; a soluble nitrogen content of 650 mg/100g malt to 800mg/100g malt; or a combination of any two or more thereof. In some embodiments, the steviol glycoside comprises at least two steviol glycosides. In some embodiments, the steviol glycoside comprises 6 wt% to 35 wt% of stevioside. In some embodiments, the steviol glycoside comprises 21 wt% to 99 wt% of rebaudioside A. In some embodiments, the steviol glycoside comprises dulcoside A, rebaudioside C, rebaudioside D, rebaudioside F, Steviolbioside, rubusoside, or a combination of any two or more thereof. In some embodiments, based on a total weight of the steviol glycoside, steviol glycoside comprises at least one of: 0.1 wt% to 2.5 wt% dulcoside A; 0.1 wt% to 4 wt% rebaudioside B; 0.1 wt% to 5 wt% rebaudioside D; 0.1 wt% to 3 wt% rebaudioside F; 0.1 wt% to 1.5 wt% steviolbioside; 0.1 wt% to 4 wt% rubusoside; or 10.0 wt% to 25.0 wt% rebaudioside C. In some embodiments, based on a total weight of the steviol glycoside, steviol glycoside comprises at least one of: up to 1.2 wt% dulcoside A; 0.1 wt% to 4 wt% rebaudioside B; up to 5 wt% rebaudioside D; 0.1 wt% to 3 wt% rebaudioside F; up to 5 wt% steviolbioside; up to 4 wt% rubusoside; 0.1 wt% to 25.0 wt% rebaudioside C; or 10 wt% to 95 wt% rebaudioside A. In some embodiments, adding the steviol glycoside comprises adding the steviol glycoside in an amount of 0.000005 kg to 0.00004 kg per metric ton of the cereal grains. In some embodiments, the steviol glycoside is added in an amount of 0.000025 kg to 0.000038 kg per metric ton of cereal grains. In some embodiments, adding the steviol glycoside comprises adding the steviol glycoside in an amount of 0.00010 kg to 0.0010 kg of the at least one steviol glycoside per 1 metric ton of the plurality of cereal grains. In some embodiments, the cereal grains comprise a barley grain, a wheat grain, a sorghum grain, a millet grain, a rye grain, an oat grain, a corn grain, a rice grain, or a combination of any two or more thereof. In some embodiments, the cereal grains comprise a barley grain. In some embodiments, the barley grain is a two row barley, or six row barley, or a combination thereof. In some embodiments, the steviol glycoside has a concentration in the water of 0.01 to 0.08 mg/L. In some embodiments, the steviol glycoside has a concentration in the water of 0.2 to 0.5 mg/L. In some embodiments, the drying comprises spraying the steviol solution on the cereal grains. In some embodiments, the method does not include adding gibberellic acid.

In some embodiments, the present invention is a method including steeping a plurality of cereal grains in water to form steeped cereal grains with an average moisture content of 36% to 55%; adding at least one steviol glycoside to the steeped cereal grains to form a mixture; germinating the mixture to form germinated cereal grains; drying the germinated cereal grains to result in a malt product having a moisture content of 2 wt% to 10 wt%; wherein the germinating is conducted for a sufficient time for more than about 80% of the cereal grains to have an average rootlet length of at least 1.5 times a kernel length; and the sufficient time for the germinating is shorter than a sufficient time for more than about 80% of the cereal grains to have an average rootlet length of at least 1.5 times a kernel length when germinating without the steviol glycoside; and the malt product exhibits a fine ground extract of about 79 wt% to 90 wt%; a viscosity of 1.0 cP to 1.6cP; a protein content of 8 wt% to 13 wt%; a soluble nitrogen content of 650 mg/100g malt to 800mg/100g malt; or a combination of any two or more thereof.

In some embodiments, the present invention is a method including steeping cereal grains in water to an average moisture content of 36% to 55% to form steeped cereal grains; adding a steviol glycoside to the steeped cereal grains to form a mixture; germinating the mixture to form germinated cereal grains; drying the germinated cereal grains sufficiently to result in a malt product having a moisture content of 2 wt% to 10 wt%; wherein the germinating is conducted for at least 12 hours less than when germinating without the steviol glycoside, and the malt product exhibits a fine ground extract of about 79 wt% to about 90 wt%; a viscosity of 1.0 cP to 1.6cP; a protein content of 8 wt% to 13 wt%; a soluble nitrogen content of 650 mg/100g malt to 800mg/100g malt; or a combination of any two or more thereof.

In some embodiments, the present invention is a method including steeping cereal grains in water to an average moisture content of 36% to 55% to form steeped cereal grains; adding a steviol glycoside to the steeped cereal grains to form a mixture; germinating the mixture to form germinated cereal grains; drying the germinated cereal grains sufficiently to result in a malt product having a moisture content of 2 wt% to 10 wt%; wherein the germinating is conducted for a time period that is reduced by at least about 10% when compared with a time period for germinating without the steviol glycoside, and the malt product exhibits a fine ground extract of 79 wt% to 90 wt%; a viscosity of 1.0 cP to 1.6cP; a protein content of 8 wt% to 13 wt%; a soluble nitrogen content of 650 mg/100g malt to 800mg/100g malt; or a combination of any two or more thereof.

### BRIEF DESCRIPTION OF THE DRAWINGS

The present invention can be further explained with reference to the attached drawings, wherein like structures are referred to by like numerals throughout the several views. The drawings shown are not necessarily to scale, with emphasis instead generally being placed upon illustrating the principles of the present invention. Further, some features may be exaggerated to show details of particular components.
Figure 1 is a flow chart showing the steps of the methods used in some embodiments of the present invention.
Figure 2 is a graph comparing a Control germinating barley kernel and a Test germinating barley kernel during steeping as used in some embodiments of the present invention.
Figure 3A is a graph comparing a Control germinating barley kernel and a Test germinating barley kernel and showing results from chitting kernels 12 h after end of steeping as used in some embodiments of the present invention.
Figure 3B is an image showing the Test sample as used in some embodiments of the present invention.
Figure 4 is an image showing Test germinating barley kernel appearance as used in some embodiments of the present invention.
Figure 5 is a graph comparing a Control germinating barley kernel and a Test germinating barley kernel with 36 h of germination time as used in some embodiments of the present invention.
Figure 6 is an image showing germination of Test germinating barley kernel as used in some embodiments of the present invention.
Figure 7 is an image showing appearance of the Test germinating barley kernel as used in some embodiments of the present invention.
Figure 8 is a graph showing quantitative results of germinating the Test barley kernel for 60 hours as used in some embodiments of the present invention.
Figure 9 is a graph showing quantitative results of germinating the Control barley kernel for 72 hours as used in some embodiments of the present invention.
Figure 10 is a flow chart showing the steps of the methods used in some embodiments of the present invention

In addition, any measurements, specifications and the like shown in the figures are intended to be illustrative, and not restrictive. Therefore, specific structural and functional details disclosed herein are not to be interpreted as limiting, but merely as a representative basis for teaching one skilled in the art to variously employ the present invention.

### DETAILED DESCRIPTION OF THE INVENTION

Among those benefits and improvements that have been disclosed, other objects and advantages of this invention can become apparent from the following description taken in conjunction with the accompanying figures. Detailed embodiments of the present invention are disclosed herein; however, it is to be understood that the disclosed embodiments are merely illustrative of the invention that may be embodied in various forms. In addition, each of the examples given in connection with the various embodiments of the invention which are intended to be illustrative, and not restrictive. Any alterations and further modifications of the inventive feature illustrated herein, and any additional applications of the principles of the invention as illustrated herein, which can normally occur to one skilled in the relevant art and having possession of this disclosure, are to be considered within the scope of the invention.

Throughout the specification and claims, the following terms take the meanings explicitly associated herein, unless the context clearly dictates otherwise. The phrases "in one aspect" and "in some aspects" and the like, as used herein, do not necessarily refer to the same embodiment(s), though it may. Furthermore, the phrases "in another aspect" and "in some other aspects" as used herein do not necessarily refer to a different aspect (embodiment), although it may. Thus, as described below, various aspects (embodiments) of the invention may be readily combined, without departing from the scope or spirit of the invention.

As used herein, "about" will be understood by persons of ordinary skill in the art and will vary to some extent depending upon the context in which it is used. If there are uses of the term which are not clear to persons of ordinary skill in the art, given the context in which it is used, "about" will mean up to plus or minus 10% of the particular term.

The use of the terms "a" and "an" and "the" and similar referents in the context of describing the elements (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the embodiments and does not pose a limitation on the scope of the claims unless otherwise stated. No language in the specification should be construed as indicating any non-claimed element as essential.

In addition, as used herein, the term "or" is an inclusive "or" operator, and is equivalent to the term "and/or," unless the context clearly dictates otherwise. The term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, "acid solution" means an aqueous solution of an acid having a pH of less than 7. As a non-limiting example, the acid solution can be water having a pH of less than 7.

As used herein, "cereal grains" means any grass cultivated for the edible components of its grain, which is composed of the endosperm, germ, and bran. Some non-limiting examples of cereal grains are: barley, wheat, sorghum, millet, rye, oat, corn, and rice.

As used herein, "chitting kernels" means kernels which have begun the germination process, but a rootlet has not yet sprouted.

As used herein, "diastatic power" means the measurement of how much starch-converting enzyme any given malt contains. An example of the starch-converting enzyme is an amylase.

As used herein, "fermentable medium" means any cereal grains based solution (e.g., but not limited to, wort) capable of being fermented to yield a fermented beverage. In one aspect the fermentable medium is wort produced from malted cereals.

As used herein, "fermentation" means the conversion of carbohydrates to alcohols and carbon dioxide or organic acids using yeast under anaerobic conditions, to produce a fermented beverage such as beer.

As used herein, "friability" means the measurement of hardness or tendency of a solid substance, e.g., a cereal grain, to break into smaller pieces under duress or contact.

As used herein, "germinating" or "germination" means the process by which a plant grows from a grain.

As used herein, "kernel length" means the measurement of the length of a cereal kernel from its first end to its second end.

As used herein, "malt" means any cereal grain, such as barley, which is prepared for germination by performing a steeping step and then the steeped cereal grain is germinated until the cereal grain is sprouted, and subsequently dried, for eventual use in brewing and distilling.

As used herein, "malting" means the process of converting cereal grains (e.g. barley, rye, oats, rice and/or wheat) into malt, for use in brewing. Malting includes at least a steeping step, a germinating step and drying step (e.g., but not limited to, kilning). Malting is performed using the technological practices and processes internationally recognized by the Malting Industry, which include plant growth processes as rootlets and acrospires development, enzyme formation and changes in storage materials. The malt quality is typically measured using an analytical method issued by, for example, the European Brewery Convention ("EBC"), the American Society of Brewing Chemists ("ASBC"), and the Mitteleuropaische Brautechnische Analysenkommission (MEBAK). Most internationally adopted methods to evaluate malt quality include: analysis of soluble nitrogen (e.g., Analytica EBC 4.9.1, 4.9.2, or 4.9.3), Kohlbach Index (MEBAK 4.1.4.5.3), Hartong 45°C (MEBAK 4.1.4.11), free amino acid content (FAN - Analytica EBC 4.10), extract of malt (Analytica EBC 4.5.1), color (Analytica EBC 4.7.1), friability (Analytica EBC 4.15), diastic power (Analytica EBC 4.12), and viscosity (Analytica EBC 4.8), which are hereby incorporated by reference in their entireties. In general, a brewing malt provides friability and homogeneity (milling); ease of conversion (mashing); fermentable carbohydrate (wort production); fermentability (fermentation); color and flavor (beer quality); colloidal stability (beer quality); foam potential (beer quality); flavor stability (beer quality); and wholesomeness (beer quality).

As used herein, a "malt product" means the resulting product obtained by a malting process, which can be used interchangeably with "malt".

As used herein, "moisture content" or "water content" means the quantity of water contained in a material, such as, for example, cereal grains and is measured in weight percent ("wt %").

As used herein, a "rootlet" or a "small root" means less than a fully grown root length or branch of a root growing from a cereal grain. An ungerminated barley grain displays no rootlets.

As used herein, "steeping" means the process of soaking a solid in a liquid so as to increase the moisture content of the solid. Steeping is a step in a malting process, where a starch source, e.g., cereal grains, is soaked in water.

As used herein, "steeping degree" means moisture content of, e.g., a cereal grain.

As used herein, "steviol glycoside" means a product with the basic formula: 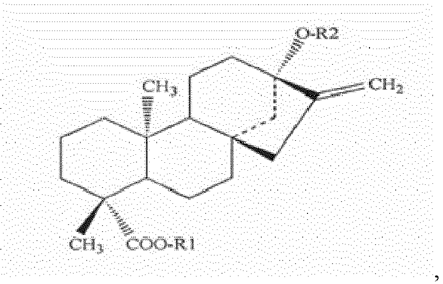 where, in some embodiments, R1 is defined as hydrogen (H), beta-glc, or beta-glc-beta-glc (2→1) and R2 is defined as H, beta-glc, beta-glc (3→1), or beta-glc-beta-glc (2→1), where "glc" is glucose. Steviol glycosides are well known in the art as are their methods of manufacture, including extraction from the leaves of *Stevia rebaudiana,* fermentation from glucose and/or production using enzymatic modification (e.g., but not limited to, using recombination technology, e.g., such as yeast strains of *Yarrowia lipolytica*). In a non-limiting example, the leaves are extracted with hot water and the aqueous extract is passed through an adsorption resin to trap and concentrate the component steviol glycosides. The resin can be washed with a solvent alcohol to release the glycosides and the product can then be recrystallized from methanol or aqueous ethanol. Ion exchange resins may be used in the purification process. The final product may be spray-dried. Steviol glycosides are 200 to 300 times sweeter than sugar and their use as a sweetener has been widespread in Asia. Steviol glycosides may include naturally occurring steviol glycosides, synthetic steviol glycosides, or any combination thereof. Naturally occurring steviol glycosides may include stevioside, rebaudioside A, rebaudioside B, rebaudioside C, rebaudioside D, rebaudioside E, rebaudioside F, dulcoside A, rubusoside and/or steviolbioside, and any combination thereof. Synthetic steviol glycosides may include, but are not limited to, rebaudioside G, rebaudioside H, rebaudioside I, rebaudioside J, rebaudioside K, rebaudioside L, rebaudioside M, rebaudioside N, and rebaudioside O, rebaudioside M2, and rebaudioside D2, or any combination thereof. Preparations of steviol glycosides may contain higher levels of stevioside or rebaudioside A than the remaining steviol glycosides, e.g., rebaudioside B, rebaudioside C, rebaudioside E, rebaudioside F, rebaudioside G, rebaudioside H, rebaudioside I, rebaudioside J, rebaudioside K, rebaudioside L, rebaudioside M [also known as rebaudioside X], rebaudioside N, and rebaudioside O, including isomers of each. In some embodiments, steviol glycosides may include Dulcoside A, Rebaudioside C, Rebaudioside A, and Stevioside. In some embodiments, steviol glycosides include steviolmonoside, steviolmonoside A, rubusoside, steviolbioside, stevioside, stevioside D, stevioside E, stevioside E2, stevioside F, stevioside A, stevioside B, rebaudioside A, rebaudioside A2, rebaudioside A3, rebaudioside B, rebaudioside C, rebaudioside C2, rebaudioside D, rebaudioside D2, rebaudioside E, rebaudioside F, rebaudioside F2, rebaudioside F3, rebaudioside H, rebaudioside I, rebaudioside 12, rebaudioside 13, rebaudioside J, rebaudioside K, rebaudioside K2, rebaudioside L, rebaudioside M, rebaudioside M2, rebaudioside N, rebaudioside O, rebaudioside O2, rebaudioside Q, rebaudioside Q2, rebaudioside Q3, rebaudioside R, rebaudioside S, rebaudioside T, rebaudioside T1, rebaudioside U, rebaudioside U2, rebaudioside V, rebaudioside V2, rebaudioside W, rebaudioside W2, rebaudioside W3, rebaudioside Y, dulcoside A, dulcoside C, or any combination thereof.

Malting of grain transforms the food reserves of the grain, which are largely insoluble starch and protein, into a substrate capable of dissolution and extraction by hot water during the later mashing stage to produce wort which is an aqueous solution of fermentable carbohydrates and soluble protein. The extent of transformation during malting is referred to as modification and is controlled by management of growth conditions to which the grain, such as barley, is exposed.

Barley variety and harvest year have an important effect on water uptake by barley kernels. Barley from dry inland regions swell and germinate more quickly than barley from maritime regions. In order to avoid unequal growth and thus poorer quality, barley is divided into grades. In addition, malting houses generally add growth regulators (e.g., germination stimulators) to interfere with the mechanisms of metabolism to obtain accelerating effects on cereal germination and enhance malt quality homogeneity.

One widely used stimulator is gibberellic acid, which is also present in small amounts in unmalted barley and other cereals. This substance is a natural plant hormone that controls modification in germinating barley. Gibberellic acid is also prepared commercially as a metabolic product of *Gibberella fujikuroi*, a fungal plant pathogen. Gibberellic acid is an expensive, white, crystalline powder with limited storage life. In general, gibberellic acid is dissolved in alcohol or acetone (1 gram in 50 mL) and diluted with water. The resultant aqueous solution is prepared within 24 hours of use because decomposition occurs and the solution becomes less effective.

The treatment of wet barley with gibberellic acid may precede the production of gibberellins by the grain itself, and tends to (i) overcome dormancy, (ii) accelerate the entire malting process, (iii) increase the respiration rate and heat output of the grain, (iv) enhance the growth of the roots and acrospires of the embryo, and (v) stimulate the rate of production of hydrolytic enzymes and hence the rate of modification of the endosperm. Treatment with suitable doses of gibberellic acid results in acceleration of modification and the production of the maximal extract two or three days sooner than it would otherwise occur. Analysis of the malt properties falls within the normally acceptable limits such that the resultant product is indistinguishable from an untreated malt. There may be a reduction in malting loss of 0-4% (based on the initial dry weight of the barley), because enzyme production and consequently modification is accelerated more than embryo growth and the concomitant malting losses. A large number of hydrolytic enzymes, including alpha-amylase, other carbohydrases, proteinases, peptidases, and phosphatases appear in increased amounts following application of gibberellic acid.

The present technology provides a shortening of germination time on cereal malting and shortening of grain dormancy, increasing the germination plant output as well as maintaining or improving malt quality through the addition of a steviol glycoside composition during cereal steeping or by spraying such a composition on the dried out or already chitting cereal. Although it was previously known that steviol glycosides may stimulate alpha-amylase formation in barley, it was surprisingly found by the present inventors that steviol glycosides stimulate the formation of other hydrolytic enzymes in barley, such as beta-glucanases, phosphatases, and proteases, which are essential for cereal malting. The present technology also provides improvement in storage, shelf-life, handling and application over that of gibberellic acid.

In some embodiments, the present invention is a method including: (a) obtaining a plurality of cereal grains; (b) combining the plurality of cereal grains with water; (c) steeping the plurality of cereal grains in the water until the plurality of cereal grains has an average moisture content of 36 wt% to 55 wt%; (d) after the steeping step, adding at least one steviol glycoside to the plurality of cereal grains to form a mixture; (e) germinating the mixture of the plurality of cereal grains and the at least one steviol glycoside, where the germinating step is conducted for at least 12 hours less than when germinating without the at least one steviol glycoside, and (f) drying the germinated plurality of cereal grains sufficiently to result in a malt product having a moisture content of 2 wt% to 10 wt%; where the malt product has the following characteristics: a fine ground extract of 80 wt% to 90 wt%, a viscosity of 1.0 cP to 1.6cP; a protein content of 8 wt% to 13 wt%, a soluble nitrogen content of 650 mg/100g malt to 800mg/100g malt, or any combination thereof. In some embodiments, the germinating step is conducted for at least 13, 14, 15, 16, 17, 18, 19, 20, 21, 22, 23, or 24 hours less than when germinating without the at least one steviol glycoside. In some embodiments, the germinating step is conducted for 12, 13, 14, 15, 16, 17, 18, 19, 20, 21, 22, 23, 24, 25, 26, 27, 28, 29, or 30 hours less than when germinating without the at least one steviol glycoside. In some embodiment, the germinating step is conducted for 12 to 30 hours less than when germinating without the at least one steviol glycoside. This includes 12 to 16, 12 to 20, 12 to 24, 12 to 28, 14 to 18, 14 to 20, 14 to 24, 14 to 28, 14 to 30, 16 to 20, 16 to 22, 16 to 24, 16 to 28, 16 to 30, 18 to 22, 18 to 24, 18 to 28, 18 to 30, 20 to 24, 20 to 28, 20 to 30, 22 to 28, 22 to 30, 24 to 28, or 24 to 30 hours less than when germinating without the at least one steviol glycoside.

In some embodiments, the present invention is a method including steeping cereal grains in water to an average moisture content of 36% to 55% to form steeped cereal grains; adding a steviol glycoside to the steeped cereal grains to form a mixture; germinating the mixture to form germinated cereal grains; drying the germinated cereal grains sufficiently to result in a malt product having a moisture content of 2 wt% to 10 wt%; wherein the germinating is conducted for a time period that is reduced by at least about 10% when compared with a time period for germinating without the steviol glycoside, and the malt product exhibits a fine ground extract of 80 wt% to 90 wt%; a viscosity of 1.0 cP to 1.6cP; a protein content of 8 wt% to 13 wt%; a soluble nitrogen content of 650 mg/100g malt to 800mg/100g malt; or a combination of any two or more thereof. In some embodiments, the germinating is conducted for a time period that is reduced by about 10, 11, 12, 13, 14, 15, 16, 17, 18, 19, 20, 21, 22, 23, 24, 25, 26, 27, 28, 29, or 30%, or more, when compared with a time period for germinating without the steviol glycoside. In some embodiments, the germinating is conducted for a time period that is reduced by at least about 10, 11, 12, 13, 14, 15, 16, 17, 18, 19, 20, 21, 22, 23, 24, 25, 26, 27, 28, 29, or 30%, or more, when compared with a time period for germinating without the steviol glycoside. In some embodiments, the germinating is conducted for a time period that is reduced by about 10% to about 30% when compared with a time period for germinating without the steviol glycoside. This includes 10% to 15%, 10% to 20%, 10% to 25%, 12% to 15%, 12% to 18%, 12% to 20%, 12% to 22%, 12% to 25%, 12% to 28%, 12% to 30%, 15% to 20%, 15% to 25%, 15% to 30%, 18% to 20%, 18% to 22%, 18% to 25%, 18% to 28%, 18% to 30%, 20% to 25%, 20% to 30%, 22% to 25%, 22% to 28%, 22% to 30%, 25% to 28%, 25% to 30%, or 28% to 30% when compared with a time period for germinating without the steviol glycoside.

In some embodiments, the present invention is a method including: (a) obtaining a plurality of cereal grains; (b) combining the plurality of cereal grains with water; (c) steeping the plurality of cereal grains in the water until the plurality of cereal grains has an average moisture content of 36 wt% to 55 wt%; (d) after the steeping step, adding at least one steviol glycoside to the plurality of cereal grains to form a mixture; (e) germinating the mixture of the plurality of cereal grains and the at least one steviol glycoside, where the germinating step is conducted for a sufficient time for more than 80% of the plurality of cereal grains to have a rootlet length of at least 1.5 times a kernel length; and where the sufficient time for the germination step is shorter than a sufficient time for more than 50% of the plurality of cereal grains to have a rootlets length of at least 1.5 times a kernel length when germinating without the at least one steviol glycoside, and (f) drying the germinated plurality of cereal grains sufficiently to result in a malt product having a moisture content of 2 wt% to 10 wt%; where the malt product has the following characteristics: a fine ground extract of 80 wt% to 90 wt%, a viscosity of 1.0 cP to 1.6cP; a protein content of 8 wt% to 13 wt%, a soluble nitrogen content of 650 mg/100g malt to 800mg/100g malt, or any combination thereof.

In some embodiments, the present invention is a method including: (a) obtaining a plurality of cereal grains; (b) combining the plurality of cereal grains with water; (c) steeping the plurality of cereal grains in the water until the plurality of cereal grains has an average moisture content of 36 wt% to 55 wt%; (d) after the steeping step, adding at least one steviol glycoside to the plurality of cereal grains to form a mixture; (e) germinating the mixture of the plurality of cereal grains and the at least one steviol glycoside, where the germinating step is conducted for a sufficient time for more than about 80% of the plurality of cereal grains to have a rootlet length of at least 1.5 times a kernel length; and where the sufficient time for the germination step is shorter than a sufficient time for more than about 80% of the plurality of cereal grains to have a rootlets length of at least 1.5 times a kernel length when germinating without the at least one steviol glycoside, and (f) drying the germinated plurality of cereal grains sufficiently to result in a malt product having a moisture content of 2 wt% to 10 wt%; where the malt product has the following characteristics: a fine ground extract of about 79 wt% to about 90 wt%, a viscosity of 1.0 cP to 1.6cP; a protein content of 8 wt% to 13 wt%, a soluble nitrogen content of 650 mg/100g malt to 800mg/100g malt, or any combination thereof.

In some embodiments, the present invention is a method including steeping cereal grains in water to obtain steeped cereal grains with an average moisture content of 36 wt% to 55 wt%; adding a steviol glycoside to the steeped cereal grains to form a mixture; germinating the mixture for a first sufficient time for more than about 80% of the cereal grains to have an average rootlet length of at least 1.5 times a kernel length to form germinated cereal grains; and drying the germinated cereal grains sufficiently to result in a malt product having a moisture content of 2 wt% to 10 wt%; wherein the first sufficient time for the germination step is shorter than a second sufficient time for more than about 80% of the cereal grains to have an average rootlet length of at least 1.5 times a kernel length when germinating without the steviol glycoside, and the malt product exhibits a fine ground extract of about 79 wt% to about 90 wt%; a viscosity of 1.0 cP to 1.6cP; a protein content of 8 wt% to 13 wt%; a soluble nitrogen content of 650 mg/100g malt to 800mg/100g malt; or a combination of any two or more thereof.

In some embodiments, the present invention is a method including steeping a plurality of cereal grains in water to form steeped cereal grains with an average moisture content of 36% to 55%; adding at least one steviol glycoside to the steeped cereal grains to form a mixture; germinating the mixture to form germinated cereal grains; drying the germinated cereal grains to result in a malt product having a moisture content of 2 wt% to 10 wt%; wherein the germinating is conducted for a sufficient time for more than about 80% of the cereal grains to have an average rootlet length of at least 1.5 times a kernel length; and the sufficient time for the germinating is shorter than a sufficient time for more than about 80% of the cereal grains to have an average rootlet length of at least 1.5 times a kernel length when germinating without the steviol glycoside; and the malt product exhibits a fine ground extract of about 79 wt% to about 90 wt%; a viscosity of 1.0 cP to 1.6cP; a protein content of 8 wt% to 13 wt%; a soluble nitrogen content of 650 mg/100g malt to 800mg/100g malt; or a combination of any two or more thereof.

In some embodiments, the average moisture content is measured by, e.g., but not limited to, an infrared thermogravimetric analysis. In some embodiments, the infrared thermogravimetric analysis is conducted using the following equipment: QUIMIS Q533M Thermogravimetric analyzer).

In some embodiments, the at least one steviol glycoside includes 6 wt% - 35 wt% of stevioside based on a total weight of the at least one steviol glycoside. In some embodiments, the least one steviol glycoside includes 21 wt% - 99 wt% of rebaudioside A based on a total weight of the at least one steviol glycoside. In some embodiments, the at least one steviol glycoside includes at least one of dulcoside A, rebaudioside C, rebaudioside D, rebaudioside F, Steviolbioside, or rubusoside. In some embodiments, the at least one steviol glycoside includes at least one of: (i) 0.1 wt% to 2.5 wt% dulcoside A; (ii) 0.1 wt% to 4 wt% rebaudioside B; (iii) 0.1 wt% to 5 wt% rebaudioside D; (iv) 0.1 wt% to 3 wt% rebaudioside F; (v) 0.1 wt% to 1.5 wt% steviolbioside; (vi) 0.1 wt% to 4 wt% rubusoside; or (vii) 10.0 wt% to 25.0 wt% rebaudioside C, based on a total weight of the steviol glycoside. In some embodiments, the at least one steviol glycoside includes at least one of: (i) up to 1.2 wt% dulcoside A; (ii) 0.1 wt% to 4 wt% rebaudioside B; (iii) up to 5 wt% rebaudioside D; (iv) 0.1 wt% to 3 wt% rebaudioside F; (v) up to 5 wt% steviolbioside; (vi) up to 4 wt% rubusoside; (vii) 0.1 wt% to 25.0 wt% rebaudioside C; or (viii) 10 wt% to 95 wt% rebaudioside A, based on a total weight of the steviol glycoside.

In some embodiments, step (c) includes adding the at least one steviol glycoside in an amount of 0.000005 kg to 0.00004 kg of the at least one steviol glycoside per 1 metric ton of the plurality of cereal grains. In some embodiments, the at least one steviol glycoside is added in an amount of 0.000025 kg to 0.000038 kg per 1 metric ton of the plurality of cereal grains. In some embodiments, step (c) includes adding the at least one steviol glycoside in an amount of 0.00010 kg to 0.0010 kg of the at least one steviol glycoside per 1 metric ton of the plurality of cereal grains.

In some embodiments, the plurality of cereal grains include a barley grain, a wheat grain, a sorghum grain, a millet grain, a rye grain, an oat grain, a corn grain, a rice grain, or any combination thereof. In some embodiments, the plurality of cereal grains includes a barley grain. In some embodiments, the barley grain is a two row barley, or six row barley, or a combination thereof.

In some embodiments, the steeping step of the method includes adding the at least one steviol glycoside to water to form a steviol glycoside solution having a concentration of 0.01 to 0.08 mg/L followed by adding the steviol glycoside solution to the plurality of cereal grains. In some embodiments, the steeping step of the method includes adding the at least one steviol glycoside to water to form a steviol glycoside solution having a concentration of 0.2 to 0.5 mg/L followed by adding the steviol glycoside solution to the plurality of cereal grains. In some embodiments, the steeping step of the method includes adding the at least one steviol glycoside solution to the plurality of cereal grains by spraying the steviol glycoside solution on the plurality of cereal grains.

In some embodiments, the method does not include adding gibberellic acid.

In some embodiments, the present invention is a method including: (a) obtaining a plurality of cereal grains; (b) combining the plurality of cereal grains with water; (c) steeping the plurality of cereal grains in the water until the plurality of cereal grains has an average moisture content of 36 wt% to 55 wt%; (d) during the steeping step, adding at least one steviol glycoside to the plurality of cereal grains to form a mixture; (e) germinating the mixture of the plurality of cereal grains and the at least one steviol glycoside, where the germinating step is conducted for a sufficient time for more than 80% of the plurality of cereal grains to have a rootlet length of at least 1.5 times a kernel length; and where the sufficient time for the germination step is shorter than a sufficient time for more than 50% of the plurality of cereal grains to have a rootlets length of at least 1.5 times a kernel length when germinating without the at least one steviol glycoside, and (f) drying the germinated plurality of cereal grains sufficiently to result in a malt product having a moisture content of 2 wt% to 10 wt%; where the malt product has the following characteristics: a fine ground extract of 80 wt% to 90 wt%, a viscosity of 1.0 cP to 1.6cP; a protein content of 8 wt% to 13 wt%, a soluble nitrogen content of 650 mg/100g malt to 800mg/100g malt, or any combination thereof.

In some embodiments, the present invention is a method including: (a) obtaining a plurality of cereal grains; (b) combining the plurality of cereal grains with water; (c) steeping the plurality of cereal grains in the water until the plurality of cereal grains has an average moisture content of 36 wt% to 55 wt%; (d) during the steeping step, adding at least one steviol glycoside to the plurality of cereal grains to form a mixture; (e) germinating the mixture of the plurality of cereal grains and the at least one steviol glycoside, where the germinating step is conducted for a sufficient time for more than about 80% of the plurality of cereal grains to have a rootlet length of at least 1.5 times a kernel length; and where the sufficient time for the germination step is shorter than a sufficient time for more than about 80% of the plurality of cereal grains to have a rootlets length of at least 1.5 times a kernel length when germinating without the at least one steviol glycoside, and (f) drying the germinated plurality of cereal grains sufficiently to result in a malt product having a moisture content of 2 wt% to 10 wt%; where the malt product has the following characteristics: a fine ground extract of about 79 wt% to about 90 wt%, a viscosity of 1.0 cP to 1.6cP; a protein content of 8 wt% to 13 wt%, a soluble nitrogen content of 650 mg/100g malt to 800mg/100g malt, or any combination thereof.

In some embodiments, the steeping step of the method is repeated at least once.

In some embodiments, the at least one steviol glycoside includes at least two steviol glycosides. This includes at least 3, 4, 5, 6, 7, 8, 9, 10, 11, 12, 13, 14, or 15 steviol glycosides. In some embodiments, the at least one steviol glycoside includes 2, 3, 4, 5, 6, 7, 8, 9, 10, 11, 12, 13, 14, or 15 steviol glycosides.

In some embodiments, the at least one steviol glycoside is added to the cereal grains or the plurality of cereal grains during steeping. In some embodiments, the at least one steviol glycoside is added to the cereal grains or the plurality of cereal grains after the steeping step but before germinating step.

In some embodiments, the at least one steviol glycoside includes 0.3 wt% to 40 wt% of stevioside based on a total weight of the steviol glycoside. In some embodiments, the at least one steviol glycoside includes 6 wt% to 40 wt% of stevioside. In some embodiments, the at least one steviol glycoside includes 10 wt% to 40 wt% of stevioside. In some embodiments, the at least one steviol glycoside includes 15 wt% to 40 wt% of stevioside. In some embodiments, the at least one steviol glycoside includes 20 wt% to 40 wt% of stevioside. In some embodiments, the at least one steviol glycoside includes 25 wt% to 40 wt% of stevioside. In some embodiments, the at least one steviol glycoside includes 30 wt% to 40 wt% of stevioside. In some embodiments, the at least one steviol glycoside includes 35 wt% to 40 wt% of stevioside. In some embodiments, the at least one steviol glycoside includes 6 wt% to 35 wt% of stevioside. In some embodiments, the at least one steviol glycoside includes 6 wt% to 30 wt% of stevioside. In some embodiments, the at least one steviol glycoside includes 6 wt% to 25 wt% of stevioside. In some embodiments, the at least one steviol glycoside includes 6 wt% to 20 wt% of stevioside. In some embodiments, the at least one steviol glycoside includes 6 wt% to 15 wt% of stevioside. In some embodiments, the at least one steviol glycoside includes 6 wt% to 10 wt% of stevioside. In some embodiments, the at least one steviol glycoside includes 10 wt% to 35 wt% of stevioside. In some embodiments, the at least one steviol glycoside includes 15 wt% to 30 wt% of stevioside. In some embodiments, the at least one steviol glycoside includes 20 wt% to 25 wt% of stevioside. In some embodiments, the at least one steviol glycoside includes 0.5 wt% to 15 wt% of stevioside. In some embodiments, the at least one steviol glycoside includes 3 wt% to 15 wt% of stevioside.

In some embodiments, the least one steviol glycoside includes 15 wt% to 99 wt% of rebaudioside A based on a total weight of the steviol glycoside. In some embodiments, the least one steviol glycoside includes 21 wt% to 99 wt% of rebaudioside A. In some embodiments, the least one steviol glycoside includes 30 wt% to 99 wt% of rebaudioside A. In some embodiments, the least one steviol glycoside includes 40 wt% to 99 wt% of rebaudioside A. In some embodiments, the least one steviol glycoside includes 50 wt% to 99 wt% of rebaudioside A. In some embodiments, the least one steviol glycoside includes 60 wt% to 99 wt% of rebaudioside A. In some embodiments, the least one steviol glycoside includes 70 wt% to 99 wt% of rebaudioside A. In some embodiments, the least one steviol glycoside includes 80 wt% to 99 wt% of rebaudioside A. In some embodiments, the least one steviol glycoside includes 90 wt% to 99 wt% of rebaudioside A. In some embodiments, the least one steviol glycoside includes 21 wt% to 90 wt% of rebaudioside A. In some embodiments, the least one steviol glycoside includes 21 wt% to 80 wt% of rebaudioside A. In some embodiments, the least one steviol glycoside includes 21 wt% to 70 wt% of rebaudioside A. In some embodiments, the least one steviol glycoside includes 21 wt% to 60 wt% of rebaudioside A. In some embodiments, the least one steviol glycoside includes 21 wt% to 50 wt% of rebaudioside A. In some embodiments, the least one steviol glycoside includes 21 wt% to 40 wt% of rebaudioside A. In some embodiments, the least one steviol glycoside includes 21 wt% to 30 wt% of rebaudioside A. In some embodiments, the least one steviol glycoside includes 30 wt% to 90 wt% of rebaudioside A. In some embodiments, the least one steviol glycoside includes 40 wt% to 80 wt% of rebaudioside A. In some embodiments, the least one steviol glycoside includes 50 wt% to 70 wt% of rebaudioside A. In some embodiments, the least one steviol glycoside includes 50 wt% to 60 wt% of rebaudioside A. In some embodiments, the least one steviol glycoside includes 60 wt% to 70 wt% of rebaudioside A. In some embodiments, the least one steviol glycoside includes 15 wt% to 50 wt% of rebaudioside A.

In some embodiments, the at least one steviol glycoside includes at least one of: (i) 0.1 wt% to 2.5 wt% dulcoside A; (ii) 0.1 wt% to 4 wt% rebaudioside B; (iii) 0.1 wt% to 5 wt% rebaudioside D; (iv) 0.1 wt% to 3 wt% rebaudioside F; (v) 0.1 wt% to 1.5 wt% steviolbioside; or (vi) 0.1 wt% to 4 wt% rubusoside, or (vii) 10.0 wt% to 25.0 wt% rebaudioside C, based on a total weight of the steviol glycoside.

In some embodiments, the at least one steviol glycoside includes 0.1 wt% to 2.5 wt% dulcoside A based on a total weight of the steviol glycoside. In some embodiments, the at least one steviol glycoside includes 0.5 wt% to 2.5 wt% dulcoside A. In some embodiments, the at least one steviol glycoside includes 1 wt% to 2.5 wt% dulcoside A. In some embodiments, the at least one steviol glycoside includes 1.5 wt% to 2.5 wt% dulcoside A. In some embodiments, the at least one steviol glycoside includes 2 wt% to 2.5 wt% dulcoside A. In some embodiments, the at least one steviol glycoside includes 0.1 wt% to 2.0 wt% dulcoside A. In some embodiments, the at least one steviol glycoside includes 0.1 wt% to 1.5 wt% dulcoside A. In some embodiments, the at least one steviol glycoside includes 0.1 wt% to 1 wt% dulcoside A. In some embodiments, the at least one steviol glycoside includes 0.1 wt% to 0.5 wt% dulcoside A. In some embodiments, the at least one steviol glycoside includes 0.5 wt% to 2 wt% dulcoside A. In some embodiments, the at least one steviol glycoside includes 1 wt% to 1.5 wt% dulcoside A. In some embodiments, the at least one steviol glycoside includes 0 wt% dulcoside A. In some embodiments, the at least one steviol glycoside includes up to 1.2 wt% dulcoside A.

In some embodiments, the at least one steviol glycoside includes 0.1 wt% to 4 wt% rebaudioside B based on a total weight of the steviol glycoside. In some embodiments, the at least one steviol glycoside includes 0.5 wt% to 4 wt% rebaudioside B. In some embodiments, the at least one steviol glycoside includes 1 wt% to 4 wt% rebaudioside B. In some embodiments, the at least one steviol glycoside includes 2 wt% to 4 wt% rebaudioside B. In some embodiments, the at least one steviol glycoside includes 3 wt% to 4 wt% rebaudioside B. In some embodiments, the at least one steviol glycoside includes 0.1 wt% to 3 wt% rebaudioside B. In some embodiments, the at least one steviol glycoside includes 0.1 wt% to 2 wt% rebaudioside B. In some embodiments, the at least one steviol glycoside includes 0.1 wt% to 1 wt% rebaudioside B. In some embodiments, the at least one steviol glycoside includes 1 wt% to 3 wt% rebaudioside B. In some embodiments, the at least one steviol glycoside includes 1 wt% to 2 wt% rebaudioside B. In some embodiments, the at least one steviol glycoside includes 2 wt% to 3 wt% rebaudioside B. In some embodiments, the at least one steviol glycoside includes 0 wt% rebaudioside B.

In some embodiments, the at least one steviol glycoside includes 0.5 wt% to 25 wt% rebaudioside C. In some embodiments, the at least one steviol glycoside includes 5 wt% to 25 wt% rebaudioside C. In some embodiments, the at least one steviol glycoside includes 10 wt% to 25 wt% rebaudioside C. In some embodiments, the at least one steviol glycoside includes 15 wt% to 25 wt% rebaudioside C. In some embodiments, the at least one steviol glycoside includes 20 wt% to 25 wt% rebaudioside C. In some embodiments, the at least one steviol glycoside includes 5 wt% to 20 wt% rebaudioside C. In some embodiments, the at least one steviol glycoside includes 5 wt% to 15 wt% rebaudioside C. In some embodiments, the at least one steviol glycoside includes 5 wt% to 10 wt% rebaudioside C. In some embodiments, the at least one steviol glycoside includes 10 wt% to 20 wt% rebaudioside C. In some embodiments, the at least one steviol glycoside includes 15 wt% to 20 wt% rebaudioside C. In some embodiments, the at least one steviol glycoside includes 10 wt% to 15 wt% rebaudioside C. In some embodiments, the at least one steviol glycoside includes 0.5 wt% to 15 wt% rebaudioside C.

In some embodiments, the at least one steviol glycoside includes 0.1 wt% to 5 wt% rebaudioside D based on a total weight of the steviol glycoside. In some embodiments, the at least one steviol glycoside includes 1 wt% to 5 wt% rebaudioside D. In some embodiments, the at least one steviol glycoside includes 2 wt% to 5 wt% rebaudioside D. In some embodiments, the at least one steviol glycoside includes 3 wt% to 5 wt% rebaudioside D. In some embodiments, the at least one steviol glycoside includes 4 wt% to 5 wt% rebaudioside D. In some embodiments, the at least one steviol glycoside includes 0.1 wt% to 4 wt% rebaudioside D. In some embodiments, the at least one steviol glycoside includes 0.1 wt% to 3 wt% rebaudioside D. In some embodiments, the at least one steviol glycoside includes 0.1 wt% to 2 wt% rebaudioside D. In some embodiments, the at least one steviol glycoside includes 0.1 wt% to 1 wt% rebaudioside D. In some embodiments, the at least one steviol glycoside includes 1 wt% to 4 wt% rebaudioside D. In some embodiments, the at least one steviol glycoside includes 2 wt% to 3 wt% rebaudioside D. In some embodiments, the at least one steviol glycoside includes 0 wt% rebaudioside D. In some embodiments, the at least one steviol glycoside includes up to 1 wt% rebaudioside D.

In some embodiments, the at least one steviol glycoside includes 0.1 wt% to 3 wt% rebaudioside F based on a total weight of the steviol glycoside. In some embodiments, the at least one steviol glycoside includes 0.5 wt% to 3 wt% rebaudioside F. In some embodiments, the at least one steviol glycoside includes 1 wt% to 3 wt% rebaudioside F. In some embodiments, the at least one steviol glycoside includes 1.5 wt% to 3 wt% rebaudioside F. In some embodiments, the at least one steviol glycoside includes 2 wt% to 3 wt% rebaudioside F. In some embodiments, the at least one steviol glycoside includes 2.5 wt% to 3 wt% rebaudioside F. In some embodiments, the at least one steviol glycoside includes 0.1 wt% to 2.5 wt% rebaudioside F. In some embodiments, the at least one steviol glycoside includes 0.1 wt% to 2 wt% rebaudioside F. In some embodiments, the at least one steviol glycoside includes 0.1 wt% to 1.5 wt% rebaudioside F. In some embodiments, the at least one steviol glycoside includes 0.1 wt% to 1 wt% rebaudioside F. In some embodiments, the at least one steviol glycoside includes 0.1 wt% to 0.5 wt% rebaudioside F. In some embodiments, the at least one steviol glycoside includes 0.5 wt% to 2.5 wt% rebaudioside F. In some embodiments, the at least one steviol glycoside includes 1 wt% to 2 wt% rebaudioside F. In some embodiments, the at least one steviol glycoside includes 1.5 wt% to 2 wt% rebaudioside F. In some embodiments, the at least one steviol glycoside includes 1 wt% to 1.5 wt% rebaudioside F. In some embodiments, the at least one steviol glycoside includes 0 wt% rebaudioside F.

In some embodiments, the at least one steviol glycoside includes 0.1 wt% to 4 wt% steviolbioside based on a total weight of the steviol glycoside. In some embodiments, the at least one steviol glycoside includes 0.1 wt% to 1.5 wt% steviolbioside. In some embodiments, the at least one steviol glycoside includes 0.5 wt% to 1.5 wt% steviolbioside. In some embodiments, the at least one steviol glycoside includes 1 wt% to 1.5 wt% steviolbioside. In some embodiments, the at least one steviol glycoside includes 0.1 wt% to 1 wt% steviolbioside. In some embodiments, the at least one steviol glycoside includes 0.1 wt% to 0.5 wt% steviolbioside. In some embodiments, the at least one steviol glycoside includes 0.5 wt% to 1 wt% steviolbioside. In some embodiments, the at least one steviol glycoside includes 0 wt% steviolbioside. In some embodiments, the at least one steviol glycoside includes up to 4 wt% steviolbioside.

In some embodiments, the at least one steviol glycoside includes 0.1 wt% to 4 wt% rubusoside based on a total weight of the steviol glycoside. In some embodiments, the at least one steviol glycoside includes 1 wt% to 4 wt% rubusoside. In some embodiments, the at least one steviol glycoside includes 2 wt% to 4 wt% rubusoside. In some embodiments, the at least one steviol glycoside includes 3 wt% to 4 wt% rubusoside. In some embodiments, the at least one steviol glycoside includes 0.1 wt% to 3 wt% rubusoside. In some embodiments, the at least one steviol glycoside includes 0.1 wt% to 2 wt% rubusoside. In some embodiments, the at least one steviol glycoside includes 0.1 wt% to 1 wt% rubusoside. In some embodiments, the at least one steviol glycoside includes 1 wt% to 3 wt% rubusoside. In some embodiments, the at least one steviol glycoside includes 1 wt% to 2 wt% rubusoside. In some embodiments, the at least one steviol glycoside includes 2 wt% to 3 wt% rubusoside. In some embodiments, the at least one steviol glycoside includes 0 wt% rubusoside. In some embodiments, the at least one steviol glycoside includes up to 2 wt% rubusoside.

In some embodiments, the method includes adding the at least one steviol glycoside in an amount of 0.000005 kg to 0.00004 kg of the at least one steviol glycoside per 1 metric ton of the plurality of cereal grains. In some embodiments, the method includes adding the at least one steviol glycoside in an amount of 0.00001 kg to 0.00004 kg of the at least one steviol glycoside per 1 metric ton of the plurality of cereal grains. In some embodiments, the method includes adding the at least one steviol glycoside in an amount of 0.000015 kg to 0.00004 kg of the at least one steviol glycoside per 1 metric ton of the plurality of cereal grains. In some embodiments, the method includes adding the at least one steviol glycoside in an amount of 0.00002 kg to 0.00004 kg of the at least one steviol glycoside per 1 metric ton of the plurality of cereal grains. In some embodiments, the method includes adding the at least one steviol glycoside in an amount of 0.000025 kg to 0.00004 kg of the at least one steviol glycoside per 1 metric ton of the plurality of cereal grains. In some embodiments, the method includes adding the at least one steviol glycoside in an amount of 0.00003 kg to 0.00004 kg of the at least one steviol glycoside per 1 metric ton of the plurality of cereal grains. In some embodiments, the method includes adding the at least one steviol glycoside in an amount of 0.000035 kg to 0.00004 kg of the at least one steviol glycoside per 1 metric ton of the plurality of cereal grains. In some embodiments, the method includes adding the at least one steviol glycoside in an amount of 0.00010 kg to 0.0010 kg of the at least one steviol glycoside per 1 metric ton of the plurality of cereal grains. In some embodiments, the method includes adding the at least one steviol glycoside in an amount of 0.00010 kg to 0.00090 kg of the at least one steviol glycoside per 1 metric ton of the plurality of cereal grains.

In some embodiments, the method includes adding the at least one steviol glycoside in an amount of 0.000005 kg to 0.000035 kg of the at least one steviol glycoside per 1 metric ton of the plurality of cereal grains. In some embodiments, the method includes adding the at least one steviol glycoside in an amount of 0.000005 kg to 0.00003 kg of the at least one steviol glycoside per 1 metric ton of the plurality of cereal grains. In some embodiments, the method includes adding the at least one steviol glycoside in an amount of 0.000005 kg to 0.000025 kg of the at least one steviol glycoside per 1 metric ton of the plurality of cereal grains. In some embodiments, the method includes adding the at least one steviol glycoside in an amount of 0.000005 kg to 0.00002 kg of the at least one steviol glycoside per 1 metric ton of the plurality of cereal grains.

In some embodiments, the method includes adding the at least one steviol glycoside in an amount of 0.000035 kg to 0.00004 kg of the at least one steviol glycoside per 1 metric ton of the plurality of cereal grains. In some embodiments, the method includes adding the at least one steviol glycoside in an amount of 0.000036 kg to 0.00004 kg of the at least one steviol glycoside per 1 metric ton of the plurality of cereal grains. In some embodiments, the method includes adding the at least one steviol glycoside in an amount of 0.000037 kg to 0.00004 kg of the at least one steviol glycoside per 1 metric ton of the plurality of cereal grains. In some embodiments, the method includes adding the at least one steviol glycoside in an amount of 0.000038 kg to 0.00004 kg of the at least one steviol glycoside per 1 metric ton of the plurality of cereal grains. In some embodiments, the method includes adding the at least one steviol glycoside in an amount of 0.000039 kg to 0.00004 kg of the at least one steviol glycoside per 1 metric ton of the plurality of cereal grains. In some embodiments, the method includes adding the at least one steviol glycoside in an amount of 0.000035 kg to 0.000039 kg of the at least one steviol glycoside per 1 metric ton of the plurality of cereal grains. In some embodiments, the method includes adding the at least one steviol glycoside in an amount of 0.000035 kg to 0.000038 kg of the at least one steviol glycoside per 1 metric ton of the plurality of cereal grains. In some embodiments, the method includes adding the at least one steviol glycoside in an amount of 0.000035 kg to 0.000037 kg of the at least one steviol glycoside per 1 metric ton of the plurality of cereal grains. In some embodiments, the method includes adding the at least one steviol glycoside in an amount of 0.000035 kg to 0.000036 kg of the at least one steviol glycoside per 1 metric ton of the plurality of cereal grains.

In some embodiments, the at least one steviol glycoside is added in an amount of 0.000025 kg to 0.000038 kg per 1 metric ton of the plurality of cereal grains.

In some embodiments, the at least one steviol glycoside is added in an amount of 0.00010, 0.00011, 0.00012, 0.00013, 0.00014, 0.00015, 0.00016, 0.00017, 0.00018, 0.00019, 0.00020, 0.00021, 0.00022, 0.00023, 0.00024, 0.00025, 0.00026, 0.00027, 0.00028, 0.00029, 0.00030, 0.00031, 0.00032, 0.00033, 0.00034, 0.00035, 0.00036, 0.00037, 0.00038, 0.00039, 0.00040, 0.00041, 0.00042, 0.00043, 0.00044, 0.00045, 0.00046, 0.00047, 0.00048, 0.00049, 0.00050, 0.00051, 0.00052, 0.00053, 0.00054, 0.00055, 0.00056, 0.00057, 0.00058, 0.00059, 0.00060, 0.00061, 0.00062, 0.00063, 0.00064, 0.00065, 0.00066, 0.00067, 0.00068, 0.00069, 0.00070, 0.00071, 0.00072, 0.00073, 0.00074, 0.00075, 0.00076, 0.00077, 0.00078, 0.00079, 0.00080, 0.00081, 0.00082, 0.00083, 0.00084, 0.00085, 0.00086, 0.00087, 0.00088, 0.00089, 0.00090, 0.00091, 0.00092, 0.00093, 0.00094, 0.00095, 0.00096, 0.00097, 0.00098, 0.00099, or 0.0010 kg per 1 metric ton of the plurality of cereal grains.

In some embodiments, the at least one steviol glycoside is obtained from extraction and isolation from a plant source. In some embodiments, the plant source is *Stevia rebaudiana.* In some embodiments, the isolation comprises one or more steps of heating a *Stevia rebaudiana* starting material under reflux temperature. Exemplary procedures are presented in WO 2016023103 and US 20060083838, the entireties of which are incorporated by reference herein.

In some embodiments, the at least one steviol glycoside is obtained by recombinant production. In some embodiments, the recombinant production is by a recombinant host expressing one or more uridine 5'-diphospho (UDP) glycosyl transferases suitable for producing steviol glycosides. In some embodiments, a steviol glycoside of interest obtained by such a process is rebaudioside D or rebaudioside M. In some embodiments, the recombinant production is by an engineered yeast (i.e., yeast cells having at least one exogenous DNA sequence that is introduced into the cell, either integrated into the cell's genome or present on an extrachromosomal construct, such as a plasmid or episome), and a steviol glycoside of interest is obtained by first growing the yeast at a lower first pH and then adjusting the pH to a higher pH. In some embodiments, the recombinant host is a recombinant microorganism comprising one or more nucleotide sequence(s) encoding: a polypeptide having ent-copalyl pyrophosphate synthase activity; a polypeptide having ent-Kaurene synthase activity; a polypeptide having ent-Kaurene oxidase activity; and a polypeptide having kaurenoic acid 13-hydroxylase activity, whereby expression of the nucleotide sequence(s) confer(s) on the microorganism the ability to produce at least steviol. Exemplary procedures are described in WO 2014122227; WO 2016196321; and US 20150031868; the entireties of which are incorporated by reference herein.

In some embodiments, the at least one steviol glycoside is obtained from a biocatalytic process. In further embodiments, the steviol glycoside is obtained by (i) contacting a starting composition comprising a structurally different steviol glycoside with a microorganism and/or biocatalyst, (ii) forming the steviol glycoside, and (iii) isolating the steviol glycoside. The steviol glycoside obtained by such a process may be steviolmonoside, stevioside, rebaudioside A, rebaudioside B, rebaudioside C, rebaudioside D, rebaudioside D2, rebaudioside E, rebaudioside F, rebaudioside G, rebaudioside H, rebaudioside I, rebaudioside J, rebaudioside K, rebaudioside L, rebaudioside M, rebaudioside M2, rebaudioside N, rebaudioside O, dulcoside A, dulcoside B, rubusoside or steviolbioside. In some embodiments, the biocatalyst comprises one or more UDP-glycosyltransferases (UGT). In some embodiments, the biocatalyst comprises one or more UDP-recycling enzymes. In some embodiments, the biocatalyst comprises one or more mevalonate (MVA) pathway enzymes. In some embodiments, the biocatalyst comprises one or more non-mevalonate 2-C-methyl-D-erythritol-4-phosphate pathway (MEP/DOXP) enzymes. In some embodiments, a steviol glycoside of interest is obtained by such a process from rebaudioside A. In some embodiments, the biocatalyst is a cyclodextrin glucanotransferase from *Thermactinomyces vulgaris* and/or *Baccillus halophilus.* In some embodiments, rebaudioside M is obtained by such a process from rebaudioside A or rebaudioside D. In further embodiments, the biocatalyst comprises UGT-A from *Stevia rebaudkma* and/or UGT-B from *Oryza sativa.* Exemplary procedures are presented in US Patent No. 9,752,174; WO 2017093895; US 7,838,044; and WO 2014122227; the entireties of which are incorporated by reference herein.

In some embodiments, the at least one steviol glycoside is obtained from a synthetic or semi-synthetic process. In some embodiments, a steviol glycoside of interest is obtained from rebaudioside A. In further embodiments, the steviol glycoside of interest is rebaudioside B, rebaudioside D, or rebaudioside M. Exemplary procedures are presented in US 20140296499, the entirety of which is incorporated by reference herein.

In some embodiments, the method includes obtaining a plurality of cereal grains, e.g., barley, and combining the plurality of cereal grains with water or an acid solution, e.g., an aqueous solution of e.g., but not limited to, citric acid, hydrochloric acid, lactic acid, phosphoric acid, etc.) having a pH range of 4.5 - 6.9. In some embodiments, the method includes steeping the plurality of cereal grains in the water or acid solution for a period of time (e.g., but not limited to, 1 hour, 2 hours, 3 hours, 4 hours, 5 hours, 6 hours, 7 hours, 8 hours, 9 hours, 10 hours, 11 hours, 12 hours, 13 hours, 14 hours, 15 hours, 16 hours, 17 hours, 18 hours, 19 hours, 20 hours, etc.) In some embodiments, the method includes steeping the plurality of cereal grains in the water or acid solution for up to 60 hours.

In some embodiments, the plurality of cereal grains is steeped in the water or acid solution until the plurality of cereal grains has an average moisture content of 36-55 wt %. In some embodiments, the plurality of cereal grains is steeped in the water or acid solution until the plurality of cereal grains has an average moisture content of 40-55 wt %. In some embodiments, the plurality of cereal grains is steeped in the water or acid solution until the plurality of cereal grains has an average moisture content of 45-55 wt %. In some embodiments, the plurality of cereal grains is steeped in the water or acid solution until the plurality of cereal grains has an average moisture content of 50-55 wt %. In some embodiments, the plurality of cereal grains is steeped in the water or acid solution until the plurality of cereal grains has an average moisture content of 36-50 wt %. In some embodiments, the plurality of cereal grains is steeped in the water or acid solution until the plurality of cereal grains has an average moisture content of 36-45 wt %. In some embodiments, the plurality of cereal grains is steeped in the water or acid solution until the plurality of cereal grains has an average moisture content of 36-40 wt %. In some embodiments, the plurality of cereal grains is steeped in the water or acid solution until the plurality of cereal grains has an average moisture content of 40-50 wt %. In some embodiments, the plurality of cereal grains is steeped in the water or acid solution until the plurality of cereal grains has an average moisture content of 40-45 wt %. In some embodiments, the plurality of cereal grains is steeped in the water or acid solution until the plurality of cereal grains has an average moisture content of 45-50 wt %.

In some embodiments, the water or acid solution is drained off at least once during the steeping step. In some embodiments, the steeping step of the plurality of cereal grains prepares the cereal grains for germinating.

In some embodiments, an aeration occurs during the steeping step. In some embodiments, the aeration is conducted at a temperature ranging from 10-20 ° C. In some embodiments, the aeration is conducted at a temperature ranging from 10-15 ° C. In some embodiments, the aeration is conducted at a temperature ranging from 15-20 ° C. In some embodiments, the aeration is conducted at a temperature ranging from 13-17 ° C. In some embodiments, the aeration is conducted at a temperature ranging from 17-23 ° C. In some embodiments, the aeration is conducted at a temperature ranging from 19-21 ° C.

In some embodiments, the aeration is repeated at least once during the steeping step. Aeration is typically performed three times during the steeping step; however, aeration can be performed for up to six times, depending on malt type (e.g. on dark malts). The aeration includes the use of atmospheric oxygen.

In some embodiments, germinating the plurality of cereal grains is in a germination box. In some embodiments, the germinating is from 3-9 days. In some embodiments, the germinating is from 3-8.5 days. In some embodiments, the germinating is from 3-8 days. In some embodiments, the germinating is from 3-7.5 days. In some embodiments, the germinating is from 3-7 days. In some embodiments, the germinating is from 3-6.5 days. In some embodiments, the germinating is from 3-6 days. In some embodiments, the germinating is from 3-5.5 days. In some embodiments, the germinating is from 3-5 days. In some embodiments, the germinating is from 3-4.5 days. In some embodiments, the germinating is from 3-4 days. In some embodiments, the germinating is from 3-3.5 days. In some embodiments, the germinating is from 3.5-9 days. In some embodiments, the germinating is from 4-9 days. In some embodiments, the germinating is from 4.5-9 days. In some embodiments, the germinating is from 5-9 days. In some embodiments, the germinating is from 5.5-9 days. In some embodiments, the germinating is from 6-9 days. In some embodiments, the germinating is from 6.5-9 days. In some embodiments, the germinating is from 7-9 days. In some embodiments, the germinating is from 7.5-9 days. In some embodiments, the germinating is from 8-9 days. In some embodiments, the germinating is from 8.5-9 days. In some embodiments, the germinating is from 3.5-8.5 days. In some embodiments, the germinating is from 4-8 days. In some embodiments, the germinating is from 4.5-7.5 days. In some embodiments, the germinating is from 5-7 days. In some embodiments, the germinating is from 5.5-6.5 days.

In some embodiments, germinating the plurality of cereal grains includes a ventilation air temperature of 10-30 ° C. In some embodiments, germinating the plurality of cereal grains includes a ventilation air temperature of 15-30 ° C. In some embodiments, germinating the plurality of cereal grains includes a ventilation air temperature of 20-30 ° C. In some embodiments, germinating the plurality of cereal grains includes a ventilation air temperature of 25-30 ° C. In some embodiments, germinating the plurality of cereal grains includes a ventilation air temperature of 10-25 ° C. In some embodiments, germinating the plurality of cereal grains includes a ventilation air temperature of 10-20 ° C. In some embodiments, germinating the plurality of cereal grains includes a ventilation air temperature of 10-15 ° C. In some embodiments, germinating the plurality of cereal grains includes a ventilation air temperature of 15-25 ° C. In some embodiments, germinating the plurality of cereal grains includes a ventilation air temperature of 16-24 ° C. In some embodiments, germinating the plurality of cereal grains includes a ventilation air temperature of 17-23 ° C. In some embodiments, germinating the plurality of cereal grains includes a ventilation air temperature of 18-22 ° C. In some embodiments, germinating the plurality of cereal grains includes a ventilation air temperature of 19-21 ° C. In some embodiments, germinating the plurality of cereal grains includes a ventilation air temperature of 15-18 ° C. In some embodiments, germinating the plurality of cereal grains includes a ventilation air temperature of 11-15 ° C.

In some embodiments, the plurality of cereal grains has an average moisture content of 36-55 wt % during the germinating step. In some embodiments, the plurality of cereal grains has an average moisture content of 40-55 wt % during the germinating step. In some embodiments, the plurality of cereal grains has an average moisture content of 45-55 wt % during the germinating step. In some embodiments, the plurality of cereal grains has an average moisture content of 50-55 wt % during the germinating step. In some embodiments, the plurality of cereal grains has an average moisture content of 36-50 wt % during the germinating step. In some embodiments, the plurality of cereal grains has an average moisture content of 36-45 wt % during the germinating step. In some embodiments, the plurality of cereal grains has an average moisture content of 36-40 wt % during the germinating step. In some embodiments, the plurality of cereal grains has an average moisture content of 40-50 wt % during the germinating step. In some embodiments, the plurality of cereal grains has an average moisture content of 45-50 wt % during the germinating step. In some embodiments, the plurality of cereal grains has an average moisture content of 40-45 wt % during the germinating step. In some embodiments, the plurality of cereal grains has an average moisture content of 43-47 wt % during the germinating step.

In some embodiments, the plurality of cereal grains is mixed at least once using screw turnings (e.g., but not limited to, 1 screw turning, 2 screw turnings, 3 screw turnings, 4 screw turnings, etc.) during the germination step. In some embodiments, the mixing is conducted at least at 12 hours germination. In some embodiments, the mixing is conducted every 12 hours during germinating. In some embodiments, the mixing is conducted further at 24 hours germination. In some embodiments, the mixing is conducted further at 36 hours germination. In some embodiments, the mixing is conducted further at 48 hours germination. In some embodiments, the mixing is conducted further at 60 hours germination. In some embodiments, the mixing is conducted further at 72 hours germination.

In some embodiments, the mixing is conducted every 6-18 hours during germinating. In some embodiments, the mixing is conducted every 8-18 hours during germinating. In some embodiments, the mixing is conducted every 10-18 hours during germinating. In some embodiments, the mixing is conducted every 12-18 hours during germinating. In some embodiments, the mixing is conducted every 14-18 hours during germinating. In some embodiments, the mixing is conducted every 16-18 hours during germinating. In some embodiments, the mixing is conducted every 8-16 hours during germinating. In some embodiments, the mixing is conducted every 8-14 hours during germinating. In some embodiments, the mixing is conducted every 8-12 hours during germinating. In some embodiments, the mixing is conducted every 8-10 hours during germinating. In some embodiments, the mixing is conducted every 10-16 hours during germinating. In some embodiments, the mixing is conducted every 12-14 hours during germinating.

In some embodiments, the germinating step is conducted for a sufficient time for more than 50% of the plurality of cereal grains to have a rootlets length of at least 1.5 times a kernel length. In some embodiments, the germinating step is conducted for a sufficient time for more than 55% of the plurality of cereal grains to have a rootlets length of at least 1.5 times a kernel length. In some embodiments, the germinating step is conducted for a sufficient time for more than 60% of the plurality of cereal grains to have a rootlets length of at least 1.5 times a kernel length. In some embodiments, the germinating step is conducted for a sufficient time for more than 65% of the plurality of cereal grains to have a rootlets length of at least 1.5 times a kernel length. In some embodiments, the germinating step is conducted for a sufficient time for more than 70% of the plurality of cereal grains to have a rootlets length of at least 1.5 times a kernel length. In some embodiments, the germinating step is conducted for a sufficient time for more than 75% of the plurality of cereal grains to have a rootlets length of at least 1.5 times a kernel length. In some embodiments, the germinating step is conducted for a sufficient time for more than 80% of the plurality of cereal grains to have a rootlets length of at least 1.5 times a kernel length. In some embodiments, the germinating step is conducted for a sufficient time for more than 85% of the plurality of cereal grains to have a rootlets length of at least 1.5 times a kernel length. In some embodiments, the germinating step is conducted for a sufficient time for more than 90% of the plurality of cereal grains to have a rootlets length of at least 1.5 times a kernel length. In some embodiments, the germinating step is conducted for a sufficient time for more than 95% of the plurality of cereal grains to have a rootlets length of at least 1.5 times a kernel length.

In some embodiments, the sufficient time for the germination step is shorter than a sufficient time for more than 50% of the plurality of cereal grains to have a rootlets length of at least 1.5 times a kernel length when germinating without the at least one steviol glycoside. In some embodiments, the sufficient time for the germination step is shorter than a sufficient time for more than 55% of the plurality of cereal grains to have a rootlets length of at least 1.5 times a kernel length when germinating without the at least one steviol glycoside. In some embodiments, the sufficient time for the germination step is shorter than a sufficient time for more than 60% of the plurality of cereal grains to have a rootlets length of at least 1.5 times a kernel length when germinating without the at least one steviol glycoside. In some embodiments, the sufficient time for the germination step is shorter than a sufficient time for more than 65% of the plurality of cereal grains to have a rootlets length of at least 1.5 times a kernel length when germinating without the at least one steviol glycoside. In some embodiments, the sufficient time for the germination step is shorter than a sufficient time for more than 70% of the plurality of cereal grains to have a rootlets length of at least 1.5 times a kernel length when germinating without the at least one steviol glycoside. In some embodiments, the sufficient time for the germination step is shorter than a sufficient time for more than 75% of the plurality of cereal grains to have a rootlets length of at least 1.5 times a kernel length when germinating without the at least one steviol glycoside. In some embodiments, the sufficient time for the germination step is shorter than a sufficient time for more than 80% of the plurality of cereal grains to have a rootlets length of at least 1.5 times a kernel length when germinating without the at least one steviol glycoside. In some embodiments, the sufficient time for the germination step is shorter than a sufficient time for more than 85% of the plurality of cereal grains to have a rootlets length of at least 1.5 times a kernel length when germinating without the at least one steviol glycoside. In some embodiments, the sufficient time for the germination step is shorter than a sufficient time for more than 90% of the plurality of cereal grains to have a rootlets length of at least 1.5 times a kernel length when germinating without the at least one steviol glycoside. In some embodiments, the sufficient time for the germination step is shorter than a sufficient time for more than 95% of the plurality of cereal grains to have a rootlets length of at least 1.5 times a kernel length when germinating without the at least one steviol glycoside.

In some embodiments, the germinating step is shorter by up to 24 hours than when germinating without the at least one steviol glycoside. This includes 1, 2, 3, 4, 5, 6, 7, 8, 9, 10, 11, 12, 13, 14, 15, 16, 17, 18, 19, 20, 21, 22, or 23 hours.

In some embodiments, the germinating step is shorter by at least one hour than when germinating without the at least one steviol glycoside. This includes at least 2, 3, 4, 5, 6, 7, 8, 9, 10, 11, 12, 13, 14, 15, 16, 17, 18, 19, 20, 21, 22, 23, or 24 hours.

In some embodiments, the amount of time for the germinating step is reduced by about 10, 11, 12, 13, 14, 15, 16, 17, 18, 19, or 20% when compared with the amount of time for the germinating step without the at least one steviol glycoside. In some embodiments, the amount of time for the germinating step is reduced by about at least 10, 11, 12, 13, 14, 15, 16, 17, 18, 19, or 20% when compared with the amount of time for the germinating step without the at least one steviol glycoside. In some embodiments, the amount of time for the germinating step is reduced by up to about 10, 11, 12, 13, 14, 15, 16, 17, 18, 19, or 20% when compared with the amount of time for the germinating step without the at least one steviol glycoside.

In some embodiments, the germinating step is followed by a heating step. In some embodiments, the cooking step is kilning. In some embodiments, the kilning is performed by electrical heating using a single floor kiln. In some embodiments, the kilning is performed by oil heating using a single floor kiln. In some embodiments, the kilning is performed by natural gas heating using a single floor kiln. In some embodiments, the kilning is performed by beech wood heating using a single floor kiln. In some embodiments, the kilning is performed by burning coal heating using a single floor kiln.

In some embodiments, the kilning can include two kilning steps, including a first kilning step: a drying phase ("drying"), and a second kilning step: a curing phase ("curing").

In some embodiments, the first kilning step is conducted for 12-48 hours. In some embodiments, the first kilning step is conducted for 12-36 hours. In some embodiments, the first kilning step is conducted for 12-24 hours. In some embodiments, the first kilning step is conducted for 24-48 hours. In some embodiments, the first kilning step is conducted for 36-48 hours. In some embodiments, the first kilning step is conducted for 24-36 hours.

In some embodiments, the first kilning step is conducted for 12-22 hours. In some embodiments, the first kilning step is conducted for 12-20 hours. In some embodiments, the first kilning step is conducted for 12-18 hours. In some embodiments, the first kilning step is conducted for 12-16 hours. In some embodiments, the first kilning step is conducted for 12-14 hours. In some embodiments, the first kilning step is conducted for 14-22 hours. In some embodiments, the first kilning step is conducted for 16-22 hours. In some embodiments, the first kilning step is conducted for 18-22 hours. In some embodiments, the first kilning step is conducted for 20-22 hours. In some embodiments, the first kilning step is conducted for 14-20 hours. In some embodiments, the first kilning step is conducted for 16-18 hours.

In some embodiments, the first kilning step is conducted for 6-18 hours. In some embodiments, the first kilning step is conducted for 6-16 hours. On some embodiments, the first kilning step is conducted for 6-14 hours. In some embodiments, the first kilning step is conducted for 6-12 hours. In some embodiments, the first kilning step is conducted for 6-10 hours. In some embodiments, the first kilning step is conducted for 6-8 hours. In some embodiments, the first kilning step is conducted for 8-20 hours. In some embodiments, the first kilning step is conducted for 10-20 hours. In some embodiments, the first kilning step is conducted for 12-20 hours. In some embodiments, the first kilning step is conducted for 14-20 hours. In some embodiments, the first kilning step is conducted for 16-20 hours. In some embodiments, the first kilning step is conducted for 18-20 hours. In some embodiments, the first kilning step is conducted for 8-18 hours. In some embodiments, the first kilning step is conducted for 10-16 hours. In some embodiments, the first kilning step is conducted for 12-14 hours.

In some embodiments, the first kilning step is conducted at 20 - 84 ° C. In some embodiments, the first kilning step is conducted at 30 - 84 ° C. In some embodiments, the first kilning step is conducted at 40 - 84 ° C. In some embodiments, the first kilning step is conducted at 50 - 84 ° C. In some embodiments, the first kilning step is conducted at 60 - 84 ° C. In some embodiments, the first kilning step is conducted at 70 - 84 ° C. In some embodiments, the first kilning step is conducted at 80 - 84 ° C. In some embodiments, the first kilning step is conducted at 20 - 80 ° C. In some embodiments, the first kilning step is conducted at 20 - 70 ° C. In some embodiments, the first kilning step is conducted at 50 - 70 ° C. In some embodiments, the first kilning step is conducted at 55 - 70 ° C. In some embodiments, the first kilning step is conducted at 20 - 60 ° C. In some embodiments, the first kilning step is conducted at 20 - 50 ° C. In some embodiments, the first kilning step is conducted at 20 - 40 ° C. In some embodiments, the first kilning step is conducted at 20 - 30 ° C. In some embodiments, the first kilning step is conducted at 30 - 80 ° C. In some embodiments, the first kilning step is conducted at 40 - 70 ° C. In some embodiments, the first kilning step is conducted at 50 - 60 ° C. In some embodiments, the first kilning step is conducted at 55 - 60 ° C. In some embodiments, the first kilning step is conducted at 50 - 55 ° C.

In some embodiments, the first kilning step is conducted at 20 - 104 ° C. In some embodiments, the first kilning step is conducted at 20 - 100 ° C. In some embodiments, the first kilning step is conducted at 20 - 90 ° C. In some embodiments, the first kilning step is conducted at 20 - 80 ° C. In some embodiments, the first kilning step is conducted at 20 - 70 ° C. In some embodiments, the first kilning step is conducted at 20 - 60 ° C. In some embodiments, the first kilning step is conducted at 20 - 50 ° C. In some embodiments, the first kilning step is conducted at 20 - 40 ° C. In some embodiments, the first kilning step is conducted at 20 - 30 ° C. In some embodiments, the first kilning step is conducted at 30 - 104 ° C. In some embodiments, the first kilning step is conducted at 40 - 104 ° C. In some embodiments, the first kilning step is conducted at 50 - 104 ° C. In some embodiments, the first kilning step is conducted at 60 - 104 ° C. In some embodiments, the first kilning step is conducted at 70 - 104 ° C. In some embodiments, the first kilning step is conducted at 80 - 104 ° C. In some embodiments, the first kilning step is conducted at 90 - 104 ° C. In some embodiments, the first kilning step is conducted at 100 - 104 ° C. In some embodiments, the first kilning step is conducted at 30 - 100 ° C. In some embodiments, the first kilning step is conducted at 40 - 90 ° C. In some embodiments, the first kilning step is conducted at 50 - 80 ° C. In some embodiments, the first kilning step is conducted at 60 - 70 ° C.

In some embodiments, the second kilning step is conducted for 2-4 hours. In some embodiments, the second kilning step is conducted for 3-4 hours. In some embodiments, the second kilning step is conducted for 2-3 hours. In some embodiments, the second kilning step is conducted for 2-6 hours. In some embodiments, the second kilning step is conducted for 2, 3, 4, 5, or 6 hours.

In some embodiments, the second kilning step is conducted at 70-105 ° C. In some embodiments, the second kilning step is conducted at 75-105 ° C. In some embodiments, the second kilning step is conducted at 80-105 ° C. In some embodiments, the second kilning step is conducted at 85-105 °C. In some embodiments, the second kilning step is conducted at 90-105 ° C. In some embodiments, the second kilning step is conducted at 95-105 ° C. In some embodiments, the second kilning step is conducted at 100-105 ° C. In some embodiments, the second kilning step is conducted at 70-100 ° C. In some embodiments, the second kilning step is conducted at 70-95 ° C. In some embodiments, the second kilning step is conducted at 70-90 ° C. In some embodiments, the second kilning step is conducted at 70-85 ° C. In some embodiments, the second kilning step is conducted at 70-80 ° C. In some embodiments, the second kilning step is conducted at 70-75 ° C. In some embodiments, the second kilning step is conducted at 75-100 ° C. In some embodiments, the second kilning step is conducted at 80-95 ° C. In some embodiments, the second kilning step is conducted at 85-90 ° C.

In some embodiments, the plurality of cereal grains is kilned so as to result in a malt having a moisture content of 2-10 wt %. In some embodiments, the plurality of cereal grains is kilned so as to result in a malt having a moisture content of 4-10 wt %. In some embodiments, the plurality of cereal grains is kilned so as to result in a malt having a moisture content of 6-10 wt %. In some embodiments, the plurality of cereal grains is kilned so as to result in a malt having a moisture content of 8-10 wt %. In some embodiments, the plurality of cereal grains is kilned so as to result in a malt having a moisture content of 2-8 wt %. In some embodiments, the plurality of cereal grains is kilned so as to result in a malt having a moisture content of 2-6 wt %. In some embodiments, the plurality of cereal grains is kilned so as to result in a malt having a moisture content of 2-4 wt %. In some embodiments, the plurality of cereal grains is kilned so as to result in a malt having a moisture content of 4-8 wt %. In some embodiments, the plurality of cereal grains is kilned so as to result in a malt having a moisture content of 4-6 wt %. In some embodiments, the plurality of cereal grains is kilned so as to result in a malt having a moisture content of 6-8 wt %.

In some embodiments, the plurality of cereal grains is kilned so as to result in a malt having a moisture content of 0.1-5 wt %. In some embodiments, the plurality of cereal grains is kilned so as to result in a malt having a moisture content of 0.1-4 wt %. In some embodiments, the plurality of cereal grains is kilned so as to result in a malt having a moisture content of 0.1-3 wt %. In some embodiments, the plurality of cereal grains is kilned so as to result in a malt having a moisture content of 0.1-2 wt %. In some embodiments, the plurality of cereal grains is kilned so as to result in a malt having a moisture content of 0.1-1 wt %.

In some embodiments, the plurality of cereal grains is kilned so as to result in a malt having a moisture content of 1-5 wt %. In some embodiments, the plurality of cereal grains is kilned so as to result in a malt having a moisture content of 2-5 wt %. In some embodiments, the plurality of cereal grains is kilned so as to result in a malt having a moisture content of 3-5 wt %. In some embodiments, the plurality of cereal grains is kilned so as to result in a malt having a moisture content of 4-5 wt %. In some embodiments, the plurality of cereal grains is kilned so as to result in a malt having a moisture content of 1-4 wt %. In some embodiments, the plurality of cereal grains is kilned so as to result in a malt having a moisture content of 2-3 wt %.

In some embodiments, the malt product has a fine ground extract of about 79 wt% to about 90 wt%. In some embodiments, the malt product has a fine ground extract of about 80 wt% to about 90 wt%. In some embodiments, the malt product has a fine ground extract of 80 wt% to 90 wt%. In some embodiments, the malt product has a fine ground extract of 85 wt% to 90 wt%. In some embodiments, the malt product has a fine ground extract of 80 wt% to 90 wt%. In some embodiments, the malt product has a fine ground extract of 80 wt% to 85 wt%. In some embodiments, the malt product has a fine ground extract of 85 wt% to 90 wt%. In some embodiments, the malt product has a fine ground extract of at least 79 wt%.

In some embodiments, the malt product has a viscosity of 1cP to 1.6cP.

In some embodiments, the malt product has a protein content of 9 wt% to 12 wt%. In some embodiments, the malt product has a protein content of 9.5 wt% to 12 wt%. In some embodiments, the malt product has a protein content of 10 wt% to 12 wt%. In some embodiments, the malt product has a protein content of 10.5 wt% to 12 wt%. In some embodiments, the malt product has a protein content of 11 wt% to 12 wt%. In some embodiments, the malt product has a protein content of 11.5 wt% to 12 wt%. In some embodiments, the malt product has a protein content of 9 wt% to 11.5 wt%. In some embodiments, the malt product has a protein content of 9 wt% to 11 wt%. In some embodiments, the malt product has a protein content of 9 wt% to 10.5 wt%. In some embodiments, the malt product has a protein content of 9 wt% to 10 wt%. In some embodiments, the malt product has a protein content of 9 wt% to 9.5 wt%. In some embodiments, the malt product has a protein content of 9.5 wt% to 11.5 wt%. In some embodiments, the malt product has a protein content of 10 wt% to 11 wt%. In some embodiments, the malt product has a protein content of 10.5 wt% to 11 wt%. In some embodiments, the malt product has a protein content of 10 wt% to 10.5 wt%.

In some embodiments, the malt product has a soluble nitrogen content of 650 mg/100g malt to 800mg/100g malt. In some embodiments, the malt product has a soluble nitrogen content of 700 mg/100g malt to 800mg/100g malt. In some embodiments, the malt product has a soluble nitrogen content of 750 mg/100g malt to 800mg/100g malt. In some embodiments, the malt product has a soluble nitrogen content of 650 mg/100g malt to 750mg/100g malt. In some embodiments, the malt product has a soluble nitrogen content of 650 mg/100g malt to 700mg/100g malt. In some embodiments, the malt product has a soluble nitrogen content of 700 mg/100g malt to 750/100g malt.

In some embodiments, the method includes malt cleaning, where the malt cleaning removes the rootlets from the plurality of cereal grains. In some embodiments, the malt cleaning uses, e.g., but not limited to, a malt deculming screw.

In some embodiments, the method includes packaging, where the cleaned malt is packaged for later use in a storage vessel (e.g., but not limited to, bags, containers, etc.). In some embodiments, the cleaned malt is packaged for later use in, as a non-limiting example, a plurality of 25 kilogram bags.

In some embodiments, the method of the present invention provides increased storage life, shelf-life, handling, and application of germination stimulator. In some embodiments, the steviol glycosides can be mixed with an aqueous solution (e.g., but not limited to, water) and, after 24 hours or more, added to steeped cereal grains.

In some embodiments, the steviol glycosides and associated weight percents are shown in Table 1 (analysis conducted according to the Joint FAO-WHO Expert Committee Report on Food Additives (JECFA) method of analysis - 2010 - dry basis) and Table 2.

**Table 1: Illustrative Ranges of Steviol Glycoside in Mixture of Steviol Glycosides**

| **Steviol Glycosides** | **Minimum wt. % based on dry basis** | **Maximum wt. % based on dry basis** |
|---|---|---|
| Rebaudioside A | 21 | 99 |
| Stevioside | 6 | 35 |
| Dulcoside A | 0 | 2.5 |
| Rebaudioside B | 0 | 4 |
| Rebaudioside C | 10 | 25 |
| Rebaudioside D | 0 | 5 |
| Rebaudioside F | 0 | 3 |
| Steviolbioside | 0 | 1.5 |
| Rubusoside | 0 | 4 |
| Total | 37 | 99 |

**Table 2: Illustrative Ranges of Steviol Glycoside in Mixture of Steviol Glycosides**

| **Steviol Glycosides** | **Compound 1 (wt. % based on drv basis)** | **Compound 2 (wt. % based on drv basis)** |
|---|---|---|
| Rebaudioside A | 30.7 | 47.9 |
| Stevioside | 6.7 | 37.9 |
| Dulcoside A | 0 | 0 |
| Rebaudioside B | 2.6 | 1.6 |
| Rebaudioside C | 12.8 | 7.8 |
| Rebaudioside D | 0 | 2.2 |
| Rebaudioside F | 1.9 | 0.8 |
| Steviolbioside | 0 | 1.1 |
| Rubusoside | 0 | 0 |
| Total | 54.7 | 99.2 |

In some embodiments, the at least one steviol glycoside can be diluted in water to form a steviol glycoside solution and sprayed onto the germinating cereal grains, e.g., through a nozzle using compressed air or by pumping. In some embodiments, the addition of at least one steviol glycoside can be spraying on to the cereal grains. The spraying can be conducted between the steeping step to the germinating step.

In some embodiments, the at least one steviol glycoside is added to the cereal grains in an amount ranging from 0.000005-0.00004 kg per 1 metric ton of unmalted cereal grains, where the untreated cereal grains are barley, and where the barley has a moisture content of between 10-55% (e.g., but not limited to, 10%, 15%, 20%, 25%, 30%, 35%, 40%, 45%, 50%, or 55%).

In some embodiments, the steeping step of the method includes adding the at least one steviol glycoside to water to form a steviol glycoside solution having a concentration of 0.01 to 0.08 mg/L (e.g., but not limited to, 0.01 mg/L, 0.02 mg/L, 0.03 mg/L, 0.04 mg/L, 0.05 mg/L, 0.06 mg/L, 0.07 mg/L, and 0.08 mg/L).

The present invention, thus generally described, will be understood more readily by reference to the following examples, which are provided by way of illustration and are not intended to be limiting of the present invention.

### EXAMPLES

The following examples are intended to illustrate the invention and should not be construed as limiting the invention in any way.

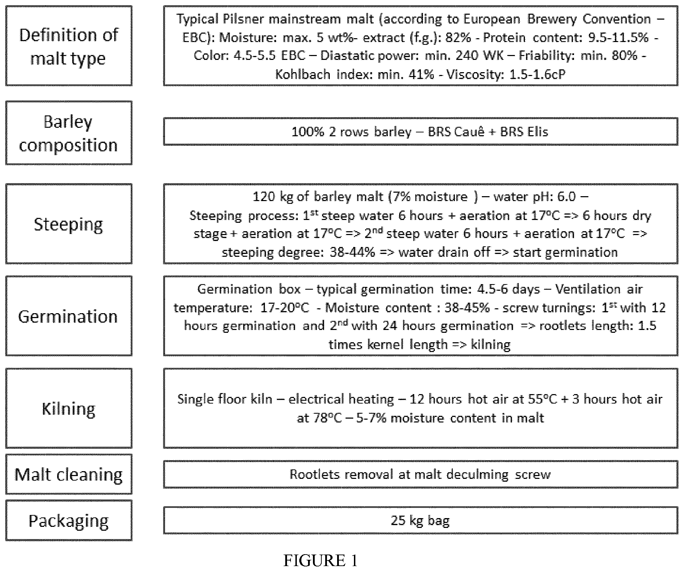

**Example 1.** Cereal grain malting trials were performed according to the methods described herein to compare Control malt with Test malt, where steviol glycosides were added at a rate of 0.000038 kg per 1 metric ton of unmalted barley at the end of the steeping process, prior to germination. Tables 1 and 2 illustrate the weight percent ranges of each steviol glycoside in a mixture of steviol glycosides. Steviol glycosides were not added to the Control malt. Figure 1 illustrates the steps performed in these methods.

Specifically, Figure 1 shows typical malt quality specifications adopted for the malt type used in this example, which was a Pilsner malt, with a moisture content of a maximum of 5%, extract of 82%, protein content of between 9.5-11.5%, color of 4.5 to 5.5 as measured by EBC, diastatic power having a minimum of 240 Windisch-Kolbach (WK), a friability of a minimum of 80%, a Kohlbach index of a minimum of 41%, and a viscosity of between 1.5-1.6 centipoise. The barley composition included 100% two row barley, in which the morphology of the barley was that the kernels made up two rows and were symmetrical and of an even size.

Figure 1 describes the steeping process performed in flat bottomed steep vessel which included adding 120 kg of barley malt having a 7% moisture content to water having a pH of 6.0. The steeping process included two steeping steps, including a steeping step which was conducted for 6 hours and was aerated at 17°C, followed by a drying step which was conducted for 6 hours and was aerated at 17°C. The steeping step was repeated. The steeping degree of the cereal grains measured 38-44%. The water was drained off in preparation for germination.

Figure 1 then describes the germinating step which occurred in a typical rectangular germination box (e.g., unit type Saladin) for 4.5-6 days. The ventilation air temperature during the germinating step was 17-20°C, and the moisture content was 38-45%. The screw turnings, which provide the mixing mechanism for the germinating kernels, were used first after 12 hours of germination and second after 24 hours of germination. Once the rootlet length averaged 1.5 times the kernel length, the kernels were kilned.

Measurements of rootlet length were conducted on 100 metric grams kernel samples, directly comparing germinated barley kernels with ungerminated barley kernels of 2.5 mm length. The percentage of kernels with rootlet length equaling or more than 1.5 times the reference was calculated.

The kilning step is then described in Figure 1 as using a single floor kiln with electrical heating. The kernels were heated for 12 hours using hot air at 55°C, then for 3 hours using hot air at 78°C. The resulting malt had a 5-7% moisture content. The malt was cleaned by removing the rootlets using a malt deculming screw, and the cleaned malt was packaged into 25 kilogram bags.

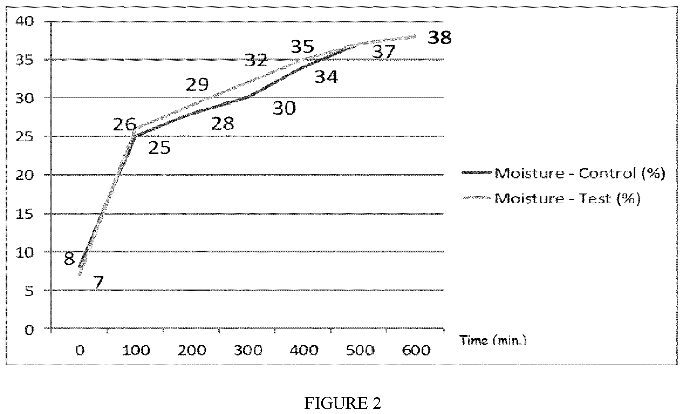

Figure 2 is a graph showing that the Control malt and Test malt presented similar results for steeping degree, i.e., moisture content.

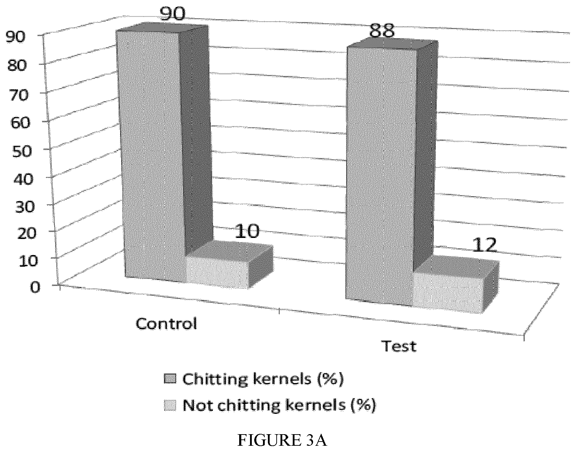

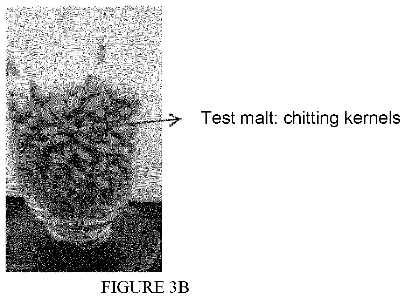

Figure 3A is a graph showing that chitting kernels resulting from steeping after 12 hours were similar for Control malt and Test malt, indicating that addition of at least one steviol glycoside does not affect the early stages of germination. Figure 3B is an image showing Test malt appearance with 88% chitting kernels which had a 12 hour germination time.

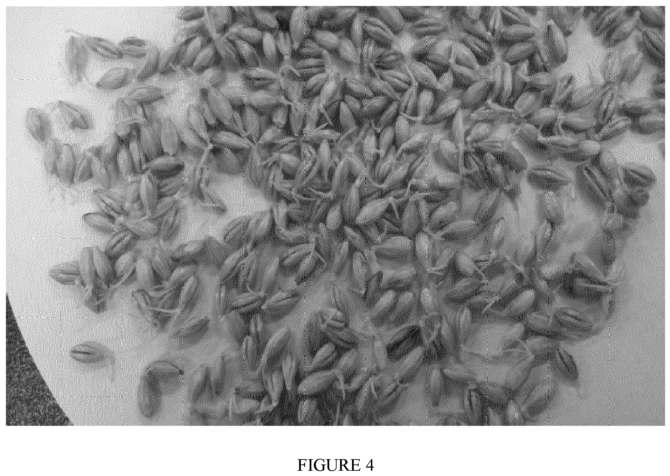

Figure 4 is an image showing Test malt appearance with 52.8% forked root pieces and 40.7% single root pieces at 24 hours germination time. Thus, 93.5% of the kernels had rootlets.

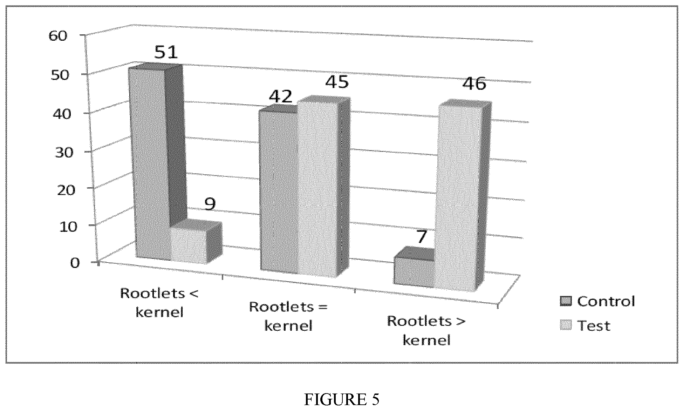

Figure 5 is a graph showing results after 36 hours of germinating the Control malt and the Test malt. 49% of the Control malt presented the same or longer rootlet length compared to kernel size. 91% of the Test malt presented the same or longer rootlet length compared to kernel size. Therefore, since the only difference between Control malt and Test malt was the addition of steviol glycosides to the Test malt, steviol glycosides accelerated barley rootlet development by at least 80%.

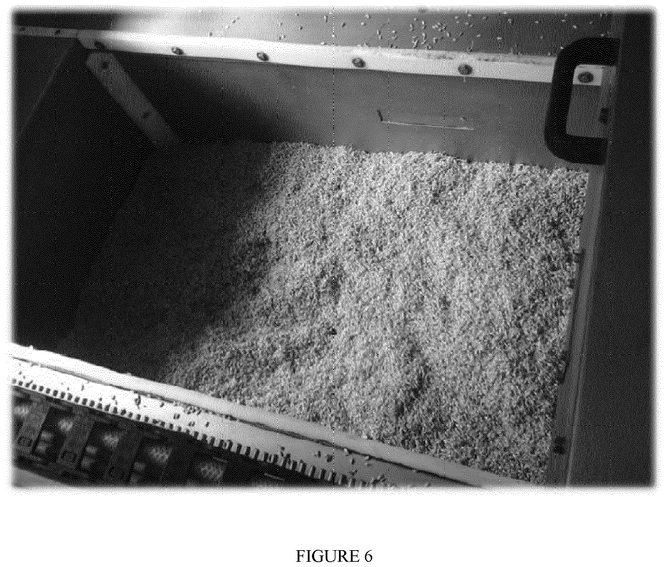

Figure 6 is an image showing the Test malt germinating for 48 hours in a germination box. The ventilation air temperature during the germinating step was 17-20°C, and the moisture content was 38-45%. The malt was mixed two times during the germination step; where the first mixing was after 12 hours of germination, and the second mixing was after 24 hours of germination.

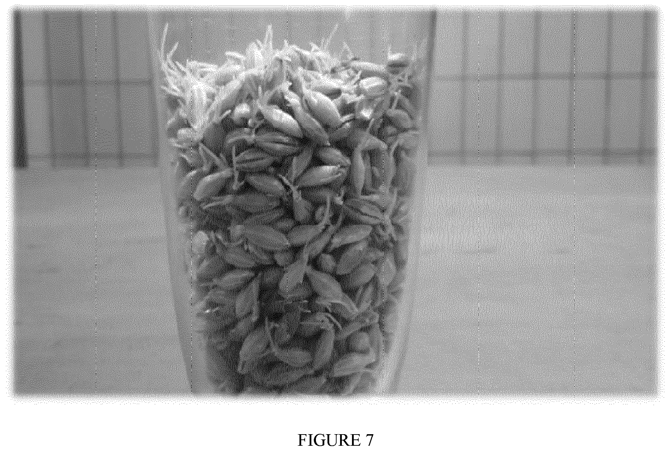

Figure 7 is an image showing the appearance of Test malt after germinating for 48 hours. The rootlets were measured, and 57.5% of the kernels had rootlets that were longer than kernel length and 31% of the kernels had rootlets that were the same length as kernel length.

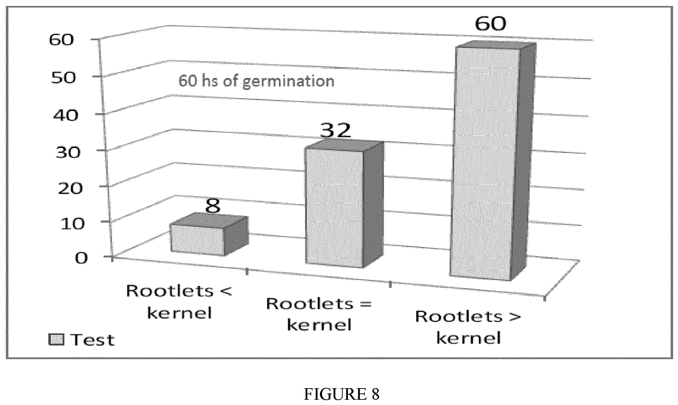

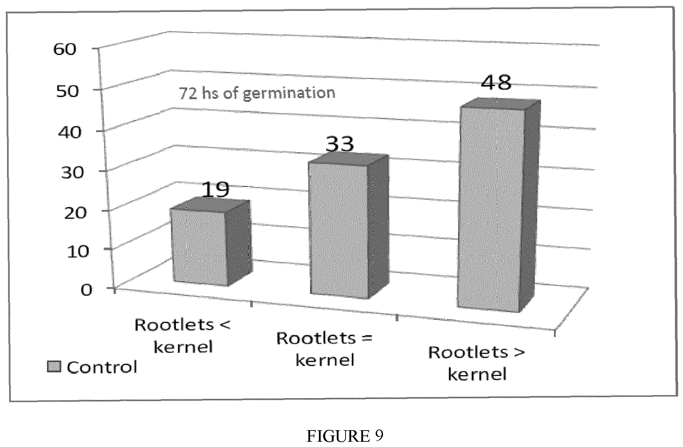

Figures 8 and 9 are graphs showing the size of rootlets distribution for Control and Test kernels. "Rootlets < kernel" refers to kernels having at least one rootlet shorter than the kernel. "Rootlets = kernel" means that for each kernel, there was at least one rootlet measuring the same length as the kernel. "Rootlets > kernel" means that at least one rootlet was longer than the kernel. Figures 8 and 9 illustrate the results from measuring rootlet length after 60 hours of germination of the Test malt and 72 hours of germination of the Control malt. The Test malt had 92% (32% + 60%) of the kernels with the same rootlet length or longer rootlet length after 60 hours of germination compared with the Control malt, which had 81% (33% + 48%) of the kernels with the same or longer rootlet length after 72 hours of germination. So, (1) the Test malt had a germination time of at least 12 hours (18%) faster than the Control malt, and (2) the Test malt had an increased germination of at least 10%, measuring about 12%, compared with the Control malt.

Table 3 summarizes the results of germinating for the Test malt. Table 3 shows that the target results for rootlet size were achieved about 24 hours faster on the Test malt compared with the Control malt due to the addition of at least one steviol glycoside at the end of the steeping step and beginning of the germinating step. Germination of Test malt was completed within 3.5 days - which was about 24 hours shorter germination time than the Control malt, which completed germination in 4.5 days.

**Table 3. Test Malt Results At Germination Step**

| **Number** | **Time (hours)** | **Temperature (°C)** | **Moisture content (wt %)** | **Remarks** |
|---|---|---|---|---|
| 1 | 12 | 17.5 | 38.7 | 88% chitting kernels + 12% not chitting kernels |
| 2 | 24 | 20.5 | 38.8 | 52.8% forked root pieces + 40.7% single root pieces + 6.5% chitting pieces |
| 3 | 48 | 19.6 | 44.7 | 57.5% longer kernel length + 31.0% same kernel length + 11.5% smaller kernel length |
| 4 | 60 | 19.3 | 42.8 | 60.0% longer kernel length + 32.2% same kernel length + 7.8% smaller kernel length |
| 5 | 84 | 19.3 | 42.8 | Germination completed |

Table 4 illustrates that malt quality for brewing was not affected negatively despite the faster germination time and addition of steviol glycosides. Wort color parameter was not associated with steviol glycosides application, and was instead associated with kilning - thus, the Control malt and Test malt samples presented similar results.

**Table 4. Test Malt And Control Malt Quality Results**

| **Assay** | **Control** | **Test** | **Specification** |
|---|---|---|---|
| Moisture (%) | 4.5 | 5.1 | Maximum 5.0 |
| Extract - fine ground (%) | 79.7 | 82.0 | Minimum 80.0 |
| Extract - coarse ground (%) | 78.5 | 81.1 | Minimum 78.0 |
| Extract difference (%) | 1.2 | 0.9 | Maximum 2.0 |
| Saccharification time (mins) | 5-10 | 5-10 | Maximum 15 |
| Viscosity 8.6% (cP) | 1.5 | 1.5 | Maximum 1.6 |
| Protein (%) | 10.5 | 9.5 | 9.5 - 11.5 |
| Soluble nitrogen (mg/100 g malt) | 765 | 703 | Minimum 650 |
| Kolbach Index (%) | 42 | 45 | Minimum 41 |
| Wort color* (EBC) | 6.4 | 6.9 | 4.5-5.5 |
| Hartong Index (mg/100g malt) | 43 | 44.8 | 37-41 |
| Diastatic power (WK) | 216 | 245 | Minimum 240 |
| Friability (%) | 82.0 | 87.7 | Minimum 80 |

**Example 2.** Cereal grain malting trials were performed according to the methods described herein to compare Control malts # 1, 2 and 3 with Test malts # 1, 2, 3, 4 and 5, where steviol glycosides were added at the following rates:
Test 1: 0.00019 kg per 1 metric ton of unmalted barley;
Test 2: 0.00013 kg per 1 metric ton of unmalted barley;
Test 3: 0.00024 kg per 1 metric ton of unmalted barley;
Test 4: 0.00070 kg per 1 metric ton of unmalted barley;
Test 5: 0.00043 kg per 1 metric ton of unmalted barley;

The steviol glycosides were added at the beginning of the germination process, prior to kilning. Table 5 illustrates the weight percent ranges of each steviol glycoside in a mixture of steviol glycosides.

**Table 5. Steviol Glycoside Weight Percentage Ranges**

| **Steviol Glycosides** | **wt.** | **A** | **B** | **C** | **D** | **E** |
|---|---|---|---|---|---|---|
| Rebaudioside A | % | 30 | 95.0 | 49.6 | 17.1 | 27.80 |
| Stevioside | % | 7 | 0.5 | 3.9 | 11.1 | 5.90 |
| Dulcoside A | % | 0 | 0.0 | 0.9 | 1.1 | 1.30 |
| Rebaudioside B | % | 3 | 0.5 | 1.1 | 3.6 | 2.00 |
| Rebaudioside C | % | 13 | 0.7 | 4.7 | 11.4 | 10.40 |
| Rebaudioside D | % | 0 | 0.8 | 0.6 | 0.3 | 0.80 |
| Rebaudioside F | % | 2 | 0.5 | 1.0 | 2.0 | 1.60 |
| Steviolbioside | % | 0 | 0.0 | 3.1 | 1.2 | 0.20 |
| Rubusoside | % | 0 | 0.0 | 0.4 | 1.5 | 0.60 |
| Total Steviol Glyc. | % | 55 | 98 | 65 | 49 | 51 |
| Reb A content on product | % | 6.0 | 9.5 | 5.0 | 1.7 | 2.8 |
| Carrier ratio on product blend | % | 80 | 90 | 90 | 90 | 90 |

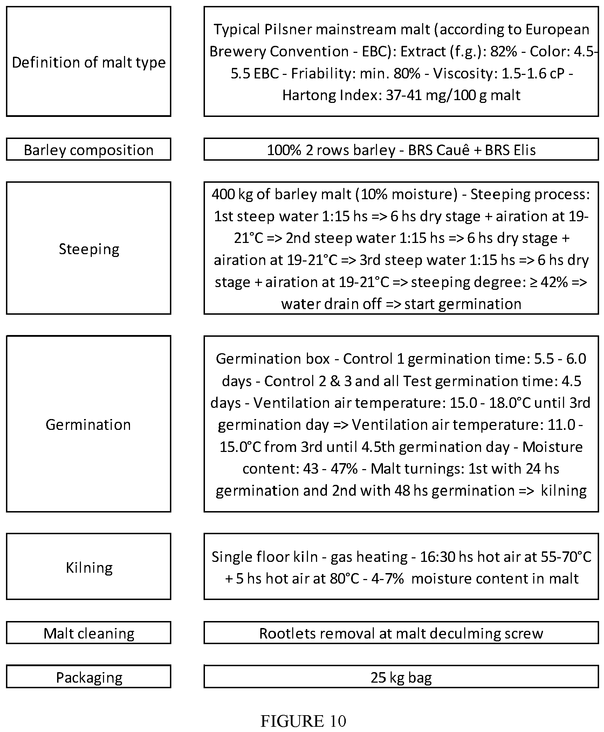

Control malts # 1, 2 and 3 and Test malts # 1, 2, 3, 4 and 5 were prepared as follows. The general process is illustrated in Figure 10.

Control Malt # 1 was produced according to the steeping process described in Figure 10, which was performed in flat bottomed steep vessel, adding 400 kg of 100% two row barley having a 10% moisture content to water. The steeping process included three steeping steps, including a steeping step which was conducted for 1:15 hours and followed by a drying step which was aeration at 19-21°C during 6 hours. The steeping step was repeated two times. When the steeping degree of the cereal grains measured≥42%, the water was drained off in preparation for germination. Steviol glycosides and/or gibberellic acid were not added during Control Malt # 1 production.

The germinating step of Control Malt # 1 is described in Figure 10, which occurred in a typical rectangular germination box (e.g., unit type Saladin) for 5.5 days. The ventilation air temperature during the germinating step was 15-18°C from the first until the third germination day, followed by ventilation air temperature of 11-15°C from the third until the last germination day, and the moisture content was 43-47%. The malt turning procedures, which provide the mixing for the germinating kernels, were used first after 24 hours of germination and second after 48 hours of germination. Once the germination time achieved the expected value for Control Malt # 1, the kernels were kilned.

The kilning step is then described in Figure 10 as using a single floor kiln with gas heating. The kernels were heated for 16:30 hours using hot air from 55-70°C, then for 5 hours using hot air at 80°C. The resulting malt had a 5.1% moisture content. The malt was cleaned by removing the rootlets using a malt deculming screw, and the cleaned malt was packaged into 25 kilogram bags. Table 6 summarizes the results of germination and malt quality evaluation for Control malt #1.

Control Malt # 2 was produced according to the steeping process described for Control Malt #1. Steviol glycosides and/or gibberellic acid were not added on Control Malt # 2 production.

The germinating step of Control Malt # 2 proceeded as similarly described for Control Malt #1, occurring in a typical rectangular germination box (e.g., unit type Saladin) for 4.5 days, rather than for 5.5 days.. Once the germination time achieved the expected value for Control Malt # 2, the kernels were kilned.

The kilning step for Control malt #2 proceeded as described for Control Malt #1. The resulting malt had a 5.3% moisture content. The malt was cleaned by removing the rootlets using a malt deculming screw, and the cleaned malt was packaged into 25 kilogram bags. Table 6 summarizes the results of germination and malt quality evaluation for Control malt #2.

Control Malt # 3 was produced in a similar manner as the steeping process described for Control Malt #1. Steviol glycosides were not added during Control Malt # 3 production. However, Gibberellic acid was added at a dosage rate of 0.00014 kg per 1 metric ton of unmalted barley at the begin of the germination process, prior to kilning.

The germinating step of Control Malt # 3 proceeded for 4.5 days as described for Control Malt #2. Once the germination time achieved the expected value for Control Malt # 3, the kernels were kilned.

The kilning step for Control malt #3 proceeded as described for Control Malt #1. The resulting malt had a 4.9% moisture content. The malt was cleaned by removing the rootlets using a malt deculming screw, and the cleaned malt was packaged into 25 kilogram bags. Table 6 summarizes the results of germination and malt quality evaluation for Control malt #3.

Test Malt # 1 was produced in a similar manner as the steeping process described for Control Malt #1. Gibberellic acid was not added during Test Malt # 1 production. However, Steviol glycoside composition A (Table 5) was added at a dosage rate of 0.00019 kg per 1 metric ton of unmalted barley, at the beginning of the germination process, prior to kilning.

The germinating step of Test Malt # 1 proceeded for 4.5 days as described for Control Malt #2. Once the germination time achieved the expected value for Test Malt # 1, the kernels were kilned.

The kilning step for Test Malt #1 proceeded as described for Control Malt #1. The resulting malt had a 6.3% moisture content. The malt was cleaned by removing the rootlets using a malt deculming screw, and the cleaned malt was packaged into 25 kilogram bags. Table 6 summarizes the results of germination and malt quality evaluation for Test Malt # 1.

Test Malt # 2 was produced in a similar manner as the steeping process described for Control Malt #1. Gibberellic acid was not added during Test Malt # 2 production. However, Steviol glycoside composition B (Table 5) was added at a dosage rate of 0.00013 kg per 1 metric ton of unmalted barley, at the beginning of the germination process, prior to kilning.

The germinating step of Test Malt # 2 proceeded for 4.5 days as described for Control Malt #2. Once the germination time achieved the expected value for Test Malt # 2, the kernels were kilned.

The kilning step for Test Malt #2 proceeded as described for Control Malt #1. The resulting malt had a 4.7% moisture content. The malt was cleaned by removing the rootlets using a malt deculming screw, and the cleaned malt was packaged into 25 kilogram bags. Table 6 summarizes the results of germination and malt quality evaluation for Test Malt # 2.

Test Malt # 3 was produced in a similar manner as the steeping process described for Control Malt #1. Gibberellic acid was not added during Test Malt # 3 production. However, Steviol glycoside composition C (Table 5) was added at a dosage rate of 0.00024 kg per 1 metric ton of unmalted barley, at the beginning of the germination process, prior to kilning.

The germinating step of Test Malt # 3 proceeded for 4.5 days as described for Control Malt #2. Once the germination time achieved the expected value for Test Malt # 3, the kernels were kilned.

The kilning step for Test Malt #3 proceeded as described for Control Malt #1. The resulting malt had a 4.9% moisture content. The malt was cleaned by removing the rootlets using a malt deculming screw, and the cleaned malt was packaged into 25 kilogram bags. Table 6 summarizes the results of germination and malt quality evaluation for Test Malt # 3.

Test Malt # 4 was produced in a similar manner as the steeping process described for Control Malt #1. Gibberellic acid was not added during Test Malt # 4 production. However, Steviol glycoside composition D (Table 5) was added at a dosage rate of 0.00070 kg per 1 metric ton of unmalted barley, at the beginning of the germination process, prior to kilning.

The germinating step of Test Malt # 4 proceeded for 4.5 days as described for Control Malt #2. Once the germination time achieved the expected value for Test Malt # 4, the kernels were kilned.

The kilning step for Test Malt #4 proceeded as described for Control Malt #1. The resulting malt had a 5.1% moisture content. The malt was cleaned by removing the rootlets using a malt deculming screw, and the cleaned malt was packaged into 25 kilogram bags. Table 6 summarizes the results of germination and malt quality evaluation for Test Malt # 4.

Test Malt # 5 was produced in a similar manner as the steeping process described for Control Malt #1. Gibberellic acid was not added during Test Malt # 5 production. However, Steviol glycoside composition E (Table 5) was added at a dosage rate of 0.00043 kg per 1 metric ton of unmalted barley, at the beginning of the germination process, prior to kilning.

The germinating step of Test Malt # 5 proceeded for 4.5 days as described for Control Malt #2. Once the germination time achieved the expected value for Test Malt # 5, the kernels were kilned.

The kilning step for Test Malt #5 proceeded as described for Control Malt #1. The resulting malt had a 6.8% moisture content. The malt was cleaned by removing the rootlets using a malt deculming screw, and the cleaned malt was packaged into 25 kilogram bags. Table 6 summarizes the results of germination and malt quality evaluation for Test Malt # 5.

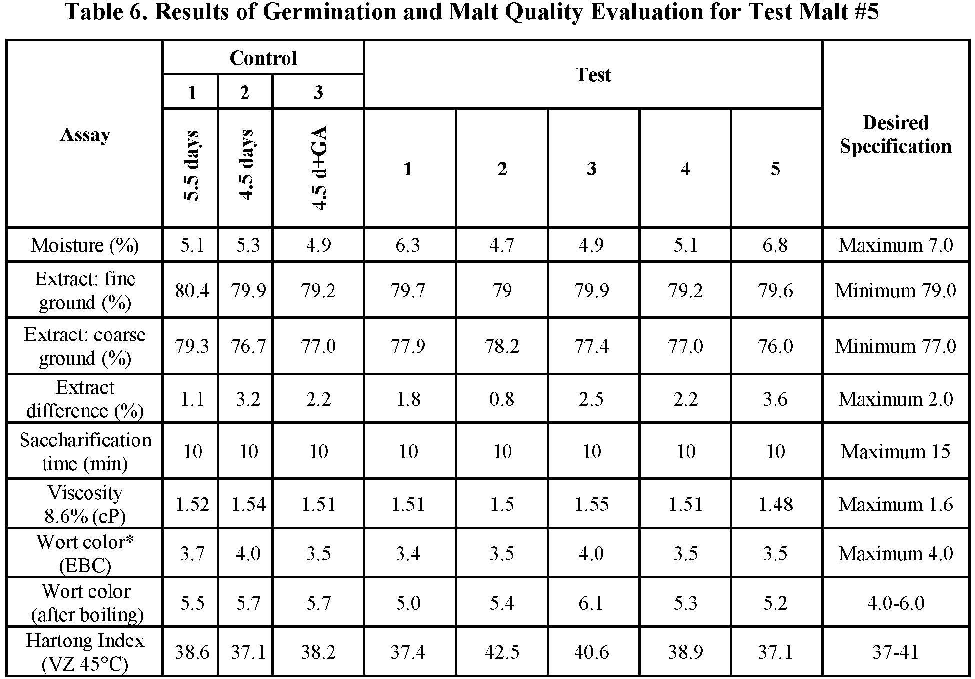

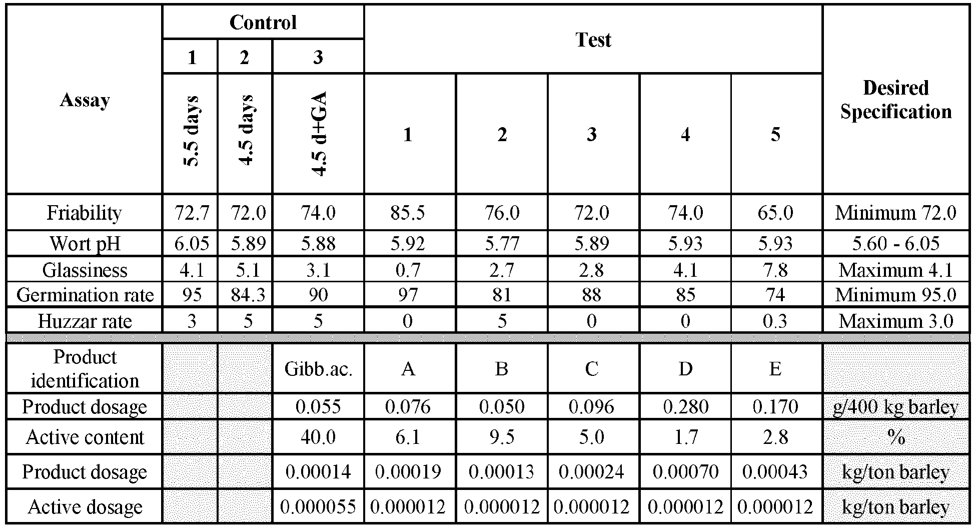

As shown in Table 6, Control #1 conforms with typical quality standards required by the brewing industry.

As shown in Table 6, Control #2 malt demonstrates the impact of shortening germination time by 24 h without utilization of growth promoters such as gibberellic acid, based on deficient results on cytolytic breakdown (e.g., extract coarse ground, extract difference, glassiness). This malt is not recommended for subsequent application in brewing as its characteristics would likely lead to poor yield of extract solubilization and difficulties on wort and beer filtration. Control #2 also presented a germination rate below minimum defined results (84.3 versus 95.0%).

As shown in Table 6, Control #3 (produced with the application of gibberellic acid) met most of minimum requirements for malting, indicating that this growth promotor is able to compensate for the shortening of 24 h on germination time, ensuring acceptable malt quality, despite slight reduction on germination rate.

As shown in Table 6, Test #1 malt met all defined specifications, presenting similar quality as Control #1 and out-performed Control #3. Friability was significantly better than Control #1 (85.5 versus 72,7%), as well as Glassiness (0.7 versus 4.1%), indicating better cytolytic breakdown than Control #1 (i.e., higher level of enzymatic breakdown of β-glucans and arabinoxylans, presenting suitable viscosity for wort and beer filtration). Test #1 also performed suitably during the malting process, meeting specifications for Germination rate and Huzzar rate.

As shown in Table 6, Test #2 malt met almost all defined specifications for malt quality, with results significantly better than Control #1 on Hartong Index (42.5 versus 38.6 mg/100 g malt), indicating extensive protein breakdown when compared with Control #1, as well as better cytolytic breakdown, based on Friability (76.0 versus 72.7%) and Glassiness results (2.7 versus 4.1%). However, Test #2 presented deficient performance during the malting process, with Germination rate (81 versus 95%) and Huzzar rate (5 versus 3%) outside of defined specifications.

As shown in Table 6, Test #3 malt met almost all defined specifications for malt quality, but cytolytic breakdown was limited, meeting just minimum quality requirements, as indicated by the Extract Difference being slightly higher than specification (2.5 versus 2.0%) and Friability results at the minimum value of defined specification (72%). Germination rate was also below minimum defined results (88 versus 95%).

As shown in Table 6, Test #4 malt quality met almost all minimum requirements for subsequent utilization in brewing, presenting quite similar malt quality as Control #1 and Control #3. With regard to performance during the malting process, Germination Rate was lower than defined specification (85 versus 95%).

As shown in Table 6, Test #5 malt did not meet minimum requirements on malt product and malting process for subsequent utilization in brewing (e.g., Extract Coarse Ground, Extract Difference, Friability and Glassiness, as well as Germination Rate), based on poor cytolytic breakdown.

Table 6 indicates that Test malts #1, 2, 3 and 4 produced with application of different Steviol Glycosides compositions and shortening of 24 h on germination time when compared to Control #1 (i.e., 4.5 versus 5.5 germination days) were able to meet the defined specification standards for malt quality and Brewing application, although results on Germination Rate for Tests #2, 3 and 4 were slightly lower than minimum defined value (i.e., 95%).

Table 6 suggests that the Rebaudiosides C and A content seems to have a positive impact on stimulation of barley germination and enzymatic breakdown of endosperm. In particular, Rebaudioside A content appears to have an effect on proteolytic enzymes activity and protein breakdown (i.e., higher content of soluble protein in malt).

Table 6 also suggests that the presence of Rebaudiosides B and F seems to impact barley germination at certain content ranges (i.e., 2.5-3.5% for Rebaudioside B and 1.9-2.0% for Rebaudioside F). Dulcoside A seems to have a negative impact on stimulation of barley germination (i.e., for higher contents of Dulcoside A, overall malt quality is lowered). Stevioside, Rebaudioside D, Steviolbioside and Rubusoside do not seem to play a significant role on the stimulation of barley germination.

Notably, Table 6 indicates that malt quality for brewing was not affected negatively for Test malts # 1, 2, 3 and 4, despite the faster germination time and addition of steviol glycosides.

### Example 3. Assay Information

The amount of material dissolved by water under prescribed conditions is called "**Extract**". The various forms of extract used for assessment of malt include "fine" and "coarse" grind extracts. A standardized mashing procedure, the Congress mash, is performed in which 50 g of malt is very coarsely ground so that the flour content obtained is only 25% (**Extract** - **coarse grind analysis**), and 50 g of malt is very finely ground so that the flour content obtained is 90% (**Extract** - **fine grind analysis**). A standardized disc mill is used for this purpose. Each 50 g of coarse grind and fine grind is mashed into 200 mL of distilled water at 45 to 46°C with constant stirring in a beaker and mashed for 30 min. The temperature in the mash vessel is then raised to 70°C in 25 min, then 100 mL of water at 70°C is added and the temperature maintained for an hour with stirring, for saccharification. The mash is then cooled in 10 to 15 min to room temperature and the beaker contents made up to 450 g with distilled water. The contents are then filtered through a filter paper. The first 100 mL of the filtrate are returned to the filter and filtration is terminated when the filter cake appears dry. The wort obtained is called Congress wort and extract value is measured with a hydrometer, or a pycnometer, or a refractometer, or a precision density measuring device. The extract yield is obtained from the Plato table and reported as percentage both on an "as is" basis or related to dry weight. Typical values for extract yields are minimum 80% for fine ground, and minimum 78% for coarse ground. High extract yield values are desirable. If **extract difference** between the coarse grind and fine grind is at a maximum 2%, the grinding then has a smaller effect on the dissolving of the extract, meaning great brewing value on malt.

**Saccharification time** analysis is performed adding 2 drops of iodine solution (0.02 mol/L) into 5 drops of Congress wort sample, gathered from mash beaker immediately after mashing temperature reaches 70°C. This procedure must be repeated at each 5 minutes until the wort color after iodine solution addition changes from deep blue to light yellow. Typical result for saccharification time analysis is maximum 15 minutes.

**Viscosity 8.6%** is the property of a liquid Congress mash wort sample whereby it tends to resist relative motion within itself. The wort concentration is 8.6% w/w extract. Viscosity is normally expressed in cP or mPa.s, measured at 20°C with a Höppler ball viscosimeter. Typical result for Viscosity 8.6% analysis is maximum 1.6 cP.

The **color** intensity of Congress mash wort is expressed in arbitrary units (EBC) measured by a visual comparison with standard Lovibond or Hellige EBC color discs, on a '10%' wort over a 25 mm light path. **Wort color** typically refers to the color measured on Congress wort sample gathered after Congress mash conclusion. **Wort color (after boiling)** typically refers to the color measured on Congress mash sample boiled for two hours after Congress mash conclusion using reflux condenser and clarified by a membrane filter. Typical result for **Wort color** analysis is maximum 4.0 EBC. Typical results for **Wort color (after boiling)** analysis are in between 4.0 - 6.0 EBC.

**Hartong Index** is the relative yield obtained comparing the extract yield of 50 g fine grind mashed for an hour at 45°C to the Congress mash extract yield. The isothermal extract at 45°C is known as the Hartong VZ 45°C and the extract result is expressed as % w/w malt dry basis, while the Index is expressed as numbers without units. Typical results for **Hartong Index** analysis are in between 37 - 41. They are closely related to the amino nitrogen content and allows a prediction to be made about nutrient availability for yeast growth.

**Friability** is the ease with which a malt can be reduced to a powder or flour. It is quantified using the Friabilimeter. The percentage friability is an index of modification, particularly related to cell walls and protein. Typical results for Friability analysis are minimum 72 or 80%.

**Glassiness** is the extent to which the malt is vitreous or steely. It is measured using a longitudinal cutter. The percentage of glassy kernels is said to be related to the number of non-germinated grains. Typical result for Glassiness analysis is maximum 4.1%.

The **Wort pH** value is measured 30 min after the start of Congress wort filtration with an electrode, meaning a numeric scale to specify the acidity or basicity of this aqueous solution. Typical results for Wort pH analysis are in between 5.60-6.05.

The **Germination rate** assay informs the percentage of germinated kernels during malting. One hundred barley grains are placed inside each one of four Petri plates containing 4mL of distilled water in a paper filter. The number of germinated kernels is measured after 24, 48 and 72 hours respectively. The germination rate is defined comparing the number of germinated kernels at 24, 48 and 72 h with total number of kernels (400). Typical result for Germination rate analysis is minimum 95%.

The **Huzzar rate** assay informs the ratio of cereal kernels in which the acrospires have emerged from end of grains. A range of devices have been used as measuring aids having magnifying lenses and ruled scales with diverging lines that are arranged over the grain with the base and tip at the "0" and "1" lines and then divide the grain length into ¼, ½, 2/3, ¾, 1 and 1+ or overgrown. The results may be expressed as an average value. Typical result for Huzzar rate analysis is maximum 3%. Inspection of data gives an indication of how uniformly the malted grain germinated and hence the proportion of overgrowth grains.

The Nitrogen content on malt is determined using the Kjeldahl method, being usually expressed as **Protein content,** calculated as N x 6.25. The protein content gives indication on malt quality with regard to yeast nutrition, beer colloidal and foam stability. Typical results for Protein analysis are in between 9.5-11.5, expressed in percentage w/w.

The **Soluble nitrogen** content is meant the nitrogen compounds which have dissolved in the Congress mash procedure, also determined using the Kj eldahl method. During malting, protein, which in barley is substantially insoluble, is partially solubilized with enzymatic breakdown. The ratio of soluble nitrogen compared to nitrogen content is known as **Kolbach Index.** Soluble nitrogen is normally expressed on a dry basis as % w/w or as % of extract, while Kolbach Index as numbers without units. Typical result for Soluble nitrogen analysis is minimum 650 mg/100g malt. Typical result for Kolbach Index is minimum 41.

**Diastatic Power** is a measure of the starch-hydrolyzing enzymes activity in malt, specially α-amylase and β-amylase. A 2% starch solution is added to a 5 mL malt mash wort and, after 30 minutes at 20°C, the maltose content produced by the malt enzymes is determined by iodine quantitative analysis. It is expressed in Windisch-Kolbach units (WK-units). The amylase potential is decisive for enzymatic breakdown of starch. Typical result for Diastatic Power analysis is minimum 240 WK.

**Moisture** analysis indicate the water content in malt, generally determined indirectly by physical methods such as loss of weight during oven drying, electrical conductivity, and near infrared reflectance. It is expressed in % w/w. Typical results for Moisture content are maximum 5% to 7%.

While certain embodiments have been illustrated and described, it should be understood that changes and modifications can be made therein in accordance with ordinary skill in the art without departing from the technology in its broader aspects as defined in the following claims.

The embodiments, illustratively described herein may suitably be practiced in the absence of any element or elements, limitation or limitations, not specifically disclosed herein. Thus, for example, the terms "comprising," "including," "containing," etc. shall be read expansively and without limitation. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the claimed technology. Additionally, the phrase "consisting essentially of' will be understood to include those elements specifically recited and those additional elements that do not materially affect the basic and novel characteristics of the claimed technology. The phrase "consisting of' excludes any element not specified.

The present disclosure is not to be limited in terms of the particular embodiments described in this application. Many modifications and variations can be made without departing from its spirit and scope, as will be apparent to those skilled in the art. Functionally equivalent methods and compositions within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods, reagents, compounds compositions or biological systems, which can of course vary. It is also to be understood that the terminology used herein is for the purpose of describing particular embodiments only, and is not intended to be limiting.

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, particularly in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, *etc.* As a non-limiting example, each range discussed herein can be readily broken down into a lower third, middle third and upper third, *etc.* As will also be understood by one skilled in the art all language such as "up to," "at least," "greater than," "less than," and the like, include the number recited and refer to ranges which can be subsequently broken down into subranges as discussed above. Finally, as will be understood by one skilled in the art, a range includes each individual member.

All publications, patent applications, issued patents, and other documents referred to in this specification are herein incorporated by reference as if each individual publication, patent application, issued patent, or other document was specifically and individually indicated to be incorporated by reference in its entirety. Definitions that are contained in text incorporated by reference are excluded to the extent that they contradict definitions in this disclosure.

Other embodiments are set forth in the following clauses.

### CLAUSES:

1. A method comprising:
   steeping cereal grains in water to obtain steeped cereal grains with an average moisture content of 36 wt% to 55 wt%;
   adding a steviol glycoside to the steeped cereal grains to form a mixture;
   germinating the mixture for a first sufficient time for more than about 80% of the cereal grains to have an average rootlet length of at least 1.5 times a kernel length to form germinated cereal grains; and
   drying the germinated cereal grains sufficiently to result in a malt product having a moisture content of 2 wt% to 10 wt%;
   wherein:
      the first sufficient time for the germination step is shorter than a second sufficient time for more than about 80% of the cereal grains to have an average rootlet length of at least 1.5 times a kernel length when germinating without the steviol glycoside, and
      the malt product exhibits:
         a fine ground extract of about 79 wt% to about 90 wt%;
         a viscosity of 1.0 cP to 1.6cP;
         a protein content of 8 wt% to 13 wt%;
         a soluble nitrogen content of 650 mg/100g malt to 800mg/100g malt; or
         a combination of any two or more thereof.
2. A method comprising:
   steeping a plurality of cereal grains in water to form steeped cereal grains with an average moisture content of 36% to 55%;
   adding at least one steviol glycoside to the steeped cereal grains to form a mixture;
   germinating the mixture to form germinated cereal grains;
   drying the germinated cereal grains to result in a malt product having a moisture content of 2 wt% to 10 wt%;
   wherein:
      the germinating is conducted for a sufficient time for more than 80% of the cereal grains to have an average rootlet length of at least 1.5 times a kernel length; and
      the sufficient time for the germinating is shorter than a sufficient time for more than about 80% of the cereal grains to have an average rootlet length of at least 1.5 times a kernel length when germinating without the steviol glycoside; and
      the malt product exhibits:
         a fine ground extract of about 79 wt% to about 90 wt%;
         a viscosity of 1.0 cP to 1.6cP;
         a protein content of 8 wt% to 13 wt%;
         a soluble nitrogen content of 650 mg/100g malt to 800mg/100g malt; or
         a combination of any two or more thereof.
3. A method comprising:
   steeping cereal grains in water to an average moisture content of 36% to 55% to form steeped cereal grains;
   adding a steviol glycoside to the steeped cereal grains to form a mixture;
   germinating the mixture to form germinated cereal grains;
   drying the germinated cereal grains sufficiently to result in a malt product having a moisture content of 2 wt% to 10 wt%;
   wherein:
      the germinating is conducted for at least 12 hours less than when germinating without the steviol glycoside, and
      the malt product exhibits:
         a fine ground extract of about 79 wt% to about 90 wt%;
         a viscosity of 1.0 cP to 1.6cP;
         a protein content of 8 wt% to 13 wt%;
         a soluble nitrogen content of 650 mg/100g malt to 800mg/100g malt; or
         a combination of any two or more thereof.
4. A method comprising:
   steeping cereal grains in water to an average moisture content of 36% to 55% to form steeped cereal grains;
   adding a steviol glycoside to the steeped cereal grains to form a mixture;
   germinating the mixture to form germinated cereal grains;
   drying the germinated cereal grains sufficiently to result in a malt product having a moisture content of 2 wt% to 10 wt%;
   wherein:
      the germinating is conducted for a time period that is reduced by at least about 10% when compared with a time period for germinating without the steviol glycoside, and
      the malt product exhibits:
         a fine ground extract of about 79 wt% to about 90 wt%;
         a viscosity of 1.0 cP to 1.6cP;
         a protein content of 8 wt% to 13 wt%;
         a soluble nitrogen content of 650 mg/100g malt to 800mg/100g malt; or
         a combination of any two or more thereof.
5. The method of any preceding Clause, wherein the steviol glycoside comprises at least two steviol glycosides.
6. The method of any preceding Clause, wherein the steviol glycoside comprises 6 wt% to 35 wt% of stevioside.
7. The method of any preceding Clause, wherein the steviol glycoside comprises 21 wt% to 99 wt% of rebaudioside A.
8. The method of any preceding Clause, wherein the steviol glycoside comprises dulcoside A, rebaudioside C, rebaudioside D, rebaudioside F, Steviolbioside, rubusoside, or a combination of any two or more thereof.
9. The method of any preceding Clause, wherein, based on a total weight of the steviol glycoside, steviol glycoside comprises at least one of:
   0.1 wt% to 2.5 wt% dulcoside A;
   0.1 wt% to 4 wt% rebaudioside B;
   0.1 wt% to 5 wt% rebaudioside D;
   0.1 wt% to 3 wt% rebaudioside F;
   0.1 wt% to 1.5 wt% steviolbioside;
   0.1 wt% to 4 wt% rubusoside; or
   10.0 wt% to 25.0 wt% rebaudioside C.
10. The method of any preceding Clause, wherein, based on a total weight of the steviol glycoside, steviol glycoside comprises at least one of:
   up to 1.2 wt% dulcoside A;
   0.1 wt% to 4 wt% rebaudioside B;
   up to 5 wt% rebaudioside D;
   0.1 wt% to 3 wt% rebaudioside F;
   up to 5 wt% steviolbioside;
   up to 4 wt% rubusoside;
   0.1 wt% to 25.0 wt% rebaudioside C; or
   10 wt% to 95 wt% rebaudioside A.
11. The method of any preceding Clause, wherein adding the steviol glycoside comprises adding the steviol glycoside in an amount of 0.000005 kg to 0.00004 kg per metric ton of the cereal grains.
12. The method of any preceding Clause, wherein the steviol glycoside is added in an amount of 0.000025 kg to 0.000038 kg per metric ton of cereal grains.
13. The method of any preceding Clause, wherein adding the steviol glycoside comprises adding the steviol glycoside in an amount of 0.00010 kg to 0.0010 kg of the at least one steviol glycoside per 1 metric ton of the plurality of cereal grains.
14. The method of any preceding Clause, wherein the cereal grains comprise a barley grain, a wheat grain, a sorghum grain, a millet grain, a rye grain, an oat grain, a corn grain, a rice grain, or a combination of any two or more thereof.
15. The method of Clause 14, wherein the cereal grains comprise a barley grain.
16. The method of Clause 15, wherein the barley grain is a two row barley, or six row barley, or a combination thereof.
17. The method of any preceding Clause, wherein the steviol glycoside has a concentration in the water of 0.01 to 0.08 mg/L.
18. The method of any preceding Clause, wherein the steviol glycoside has a concentration in the water of 0.2 to 0.5 mg/L.
19. The method of any preceding Clause, wherein the drying comprises spraying the steviol solution on the cereal grains.
20. The method of any preceding Clause, wherein the method does not include adding gibberellic acid.

## Claims

1. A method comprising:
steeping cereal grains in water to obtain steeped cereal grains with an average moisture content of 36 wt% to 55 wt%;
adding a steviol glycoside to the steeped cereal grains to form a mixture;
germinating the mixture for a first sufficient time for more than about 80% of the cereal grains to have an average rootlet length of at least 1.5 times a kernel length to form germinated cereal grains; and
drying the germinated cereal grains sufficiently to result in a malt product having a moisture content of 2 wt% to 10 wt%;
wherein:
the first sufficient time for the germination step is shorter than a second sufficient time for more than about 80% of the cereal grains to have an average rootlet length of at least 1.5 times a kernel length when germinating without the steviol glycoside, and
the malt product exhibits:
a fine ground extract of about 79 wt% to about 90 wt%;
a viscosity of 1.0 cP to 1.6cP;
a protein content of 8 wt% to 13 wt%;
a soluble nitrogen content of 650 mg/100g malt to 800mg/100g malt; or
a combination of any two or more thereof.

2. A method comprising:
steeping a plurality of cereal grains in water to form steeped cereal grains with an average moisture content of 36% to 55%;
adding at least one steviol glycoside to the steeped cereal grains to form a mixture;
germinating the mixture to form germinated cereal grains;
drying the germinated cereal grains to result in a malt product having a moisture content of 2 wt% to 10 wt%;
wherein:
the germinating is conducted for a sufficient time for more than 80% of the cereal grains to have an average rootlet length of at least 1.5 times a kernel length; and
the sufficient time for the germinating is shorter than a sufficient time for more than about 80% of the cereal grains to have an average rootlet length of at least 1.5 times a kernel length when germinating without the steviol glycoside; and
the malt product exhibits:
a fine ground extract of about 79 wt% to about 90 wt%;
a viscosity of 1.0 cP to 1.6cP;
a protein content of 8 wt% to 13 wt%;
a soluble nitrogen content of 650 mg/100g malt to 800mg/100g malt; or
a combination of any two or more thereof.

3. A method comprising:
steeping cereal grains in water to an average moisture content of 36% to 55% to form steeped cereal grains;
adding a steviol glycoside to the steeped cereal grains to form a mixture;
germinating the mixture to form germinated cereal grains;
drying the germinated cereal grains sufficiently to result in a malt product having a moisture content of 2 wt% to 10 wt%;
wherein:
the germinating is conducted for at least 12 hours less than when germinating without the steviol glycoside, and
the malt product exhibits:
a fine ground extract of about 79 wt% to about 90 wt%;
a viscosity of 1.0 cP to 1.6cP;
a protein content of 8 wt% to 13 wt%;
a soluble nitrogen content of 650 mg/100g malt to 800mg/100g malt; or
a combination of any two or more thereof.

4. A method comprising:
steeping cereal grains in water to an average moisture content of 36% to 55% to form steeped cereal grains;
adding a steviol glycoside to the steeped cereal grains to form a mixture;
germinating the mixture to form germinated cereal grains;
drying the germinated cereal grains sufficiently to result in a malt product having a moisture content of 2 wt% to 10 wt%;
wherein:
the germinating is conducted for a time period that is reduced by at least about 10% when compared with a time period for germinating without the steviol glycoside, and
the malt product exhibits:
a fine ground extract of about 79 wt% to about 90 wt%;
a viscosity of 1.0 cP to 1.6cP;
a protein content of 8 wt% to 13 wt%;
a soluble nitrogen content of 650 mg/100g malt to 800mg/100g malt; or
a combination of any two or more thereof.

5. The method of any preceding Claim, wherein the steviol glycoside comprises at least two steviol glycosides.

6. The method of any preceding Claim, wherein the steviol glycoside comprises 6 wt% to 35 wt% of stevioside.

7. The method of any preceding Claim, wherein the steviol glycoside comprises 21 wt% to 99 wt% of rebaudioside A.

8. The method of any preceding Claim, wherein the steviol glycoside comprises dulcoside A, rebaudioside C, rebaudioside D, rebaudioside F, Steviolbioside, rubusoside, or a combination of any two or more thereof.

9. The method of any preceding Claim, wherein, based on a total weight of the steviol glycoside, steviol glycoside comprises at least one of:
0.1 wt% to 2.5 wt% dulcoside A;
0.1 wt% to 4 wt% rebaudioside B;
0.1 wt% to 5 wt% rebaudioside D;
0.1 wt% to 3 wt% rebaudioside F;
0.1 wt% to 1.5 wt% steviolbioside;
0.1 wt% to 4 wt% rubusoside; or
10.0 wt% to 25.0 wt% rebaudioside C.

10. The method of any preceding Claim, wherein, based on a total weight of the steviol glycoside, steviol glycoside comprises at least one of:
up to 1.2 wt% dulcoside A;
0.1 wt% to 4 wt% rebaudioside B;
up to 5 wt% rebaudioside D;
0.1 wt% to 3 wt% rebaudioside F;
up to 5 wt% steviolbioside;
up to 4 wt% rubusoside;
0.1 wt% to 25.0 wt% rebaudioside C; or
10 wt% to 95 wt% rebaudioside A.

11. The method of any preceding Claim, wherein adding the steviol glycoside comprises adding the steviol glycoside in an amount of 0.000005 kg to 0.00004 kg per metric ton of the cereal grains.

12. The method of any preceding Claim, wherein
(i) the steviol glycoside is added in an amount of 0.000025 kg to 0.000038 kg per metric ton of cereal grains; and/or
(ii) adding the steviol glycoside comprises adding the steviol glycoside in an amount of 0.00010 kg to 0.0010 kg of the at least one steviol glycoside per 1 metric ton of the plurality of cereal grains; and/or

13. The method of any preceding Claim, wherein the cereal grains comprise a barley grain, a wheat grain, a sorghum grain, a millet grain, a rye grain, an oat grain, a corn grain, a rice grain, or a combination of any two or more thereof, preferably wherein the cereal grains comprise a barley grain, more preferably wherein the barley grain is a two row barley, or six row barley, or a combination thereof.

14. The method of any preceding Claim, wherein the steviol glycoside has a concentration in the water of 0.01 to 0.08 mg/L, preferably wherein the steviol glycoside has a concentration in the water of 0.2 to 0.5 mg/L.

15. The method of any preceding Claim, wherein (iii) the drying comprises spraying the steviol solution on the cereal grains; and/or (iv) the method does not include adding gibberellic acid.
